# EUROPEAN PATENT APPLICATION

(11) **EP 2 540 482 A1**
(43) Date of publication of application: **02.01.2013**
(21) Application number: 12006292.2
(22) Date of filing: 10.02.2010
(51) Int. Cl.: B29C 70/84, B29C 70/44, B29C 39/42, B29C 43/10, B29L 23/00, F16L 47/06, F16L 47/28, F16L 47/32, B29C 65/50, B29C 53/38

(54) **Method for manufacturing composite cylindrical body, method for molding fiber-reinforced resin molded object and molded object**

(30) Priority: 16.02.2009 JP 2009032658; 29.06.2009 JP 2009153933
(62) Divisional of application: 10741256.1
(71) Applicant: Sekisui Chemical Co., Ltd., Osaka 530-8565 (JP)
(72) Inventor: Tanaka, Katsuya, Kyoto, 6018105 (JP); Kawasaki, Shohei, Kyoto, 6018105 (JP)
(74) Representative: Müller-Boré & Partner Patentanwälte

(57) **Abstract**

The present invention relates to a method of forming a fiber-reinforced resin formed product having a cylindrical portion, by arranging a plurality of sheet-like fiber reinforcements (23), that partially overlap each other on a forming die (1a), covering the fiber layer with a vacuum bag (6), and then impregnating the fiber layer (2) by injecting resin; and to formed products obtained by using the method, in which the occurrence of wrinkles by the reinforcement fiber (2) is suppressed and which have excellent appearance and sufficient strength.

## Description

### TECHNICAL FIELD

The present invention relates to a method of joining cylindrical members, a method of manufacturing a composite cylindrical body, a method of forming a fiber-reinforced resin formed product, and formed products obtained by using these methods.

### BACKGROUND ART

Formed bodies made of fiber-reinforced resins have been widely used since they are lightweight and have high strength. For forming the pipe-like bodies, a hand lay-up molding method, a filament winding method, and a sheet winding method are generally used. In the hand lay-up molding method, a resin is impregnated by using a brush or roller with hands while being defoamed, and is laminated on a forming die so as to have a predetermined thickness. In the filament winding method, while a resin is impregnated into a continuous fiber, the continuous fiber is wound on a rotating mandrel (that is often cylindrical and made of metal) at an appropriate winding angle and formed into a predetermined shape (e.g., see Patent Literature 1). In the sheet winding method, a reinforcement fiber woven fabric that is wound in a roll form is helically wound around a core, and a resin is impregnated into the woven fabric and cured (e.g., see Patent Literature 2).

However, in these forming methods, a reinforcement fiber is wound on a forming die while a flowing liquid-like resin is impregnated into the reinforcement fiber. Thus, the resin is not solidified yet, and the wound reinforcement fiber cannot be confirmed by direct touching. Therefore, it is difficult to manage the thickness of the wound reinforcement fiber. In addition, if a curing agent is included in the resin, curing progresses with time, and thus the working operation cannot be interrupted. Moreover, during manufacture, a solvent, styrene, and the like in the resin evaporate to generate offensive odor.

In recent years, various vacuum injection forming methods (infusion forming methods) in which forming is performed in a depressurized environment have been proposed.

Such a vacuum injection forming method is disclosed, for example, in Patent Literature 3. Specifically, the vacuum injection forming method is a forming method in which a fiber lay-up layer is located on a forming die, a resin injection pipe is arranged on the fiber lay-up layer and covered with a bag film, its periphery is sealed, and a resin is injected into the bag film that is sucked and depressurized, to obtain a formed product. As a similar method, there is a forming method in which a reinforcement fiber base member is located on a forming die, a resin spreading member is provided via a release member as appropriate, this is covered with a bag film, the inside of the bag film is depressurized, and a resin is injected thereinto (e.g., see

### Patent Literatures 4 and 5).

In these forming methods, the resin is injected into the bag film and cured. Thus, the problem of generation of offensive odor is resolved, and the working environment is improved.

### CITATION LIST

### [PATENT LITERATURE]

[PTL 1] Japanese Examined Patent Publication No. 06-26858
[PTL 2] Japanese Laid-Open Patent Publication No. 2007-136997
[PTL 3] Japanese Laid-Open Patent Publication No. 10-504501
[PTL 4] Japanese Laid-Open Patent Publication No. 2002-307463
[PTL 5] Japanese Laid-Open Patent Publication No. 60-83826

### SUMMARY OF THE INVENTION

### PROBLEMS TO BE SOLVED BY THE INVENTION

However, various problems arise when the above conventional vacuum injection forming methods are used for forming a formed product having a shape with a curved surface such as a cylindrical body. In the above conventional examples, a roll-form reinforcement fiber woven fabric in a dry state of not being impregnated with a resin is wound on a rotary cylindrical die or a cylindrical product, and thus it is difficult to cover the reinforcement fiber after the required amount and the required thickness of the reinforcement fiber are ensured. In addition, by depressurization, the wound reinforcement fiber is compressed to cause wrinkles. The wrinkles of the reinforcement fiber deteriorate the appearance of a product after the forming, and also cause a reduction in strength.

Further, when forming a flanged pipe having a curved surface and a flat surface or a pipe having a bent portion such as an elbow or a tee, it is difficult to wind a reinforcement fiber without causing any wrinkles, and in particular, a wrinkle extending in a pipe axial direction may reduce the strength.

The present invention is made in view of the problems as described above, and its object is to provide a method of joining cylindrical members, a method of manufacturing a composite cylindrical body, and a method of forming a fiber-reinforced resin formed product, which facilitate management of the thickness of a formed product and which allow a desired product, in which no wrinkle occurs by a reinforcement fiber, which has an excellent appearance, and which retains a desired strength, to be efficiently obtained without depending on the level of skill of an operator. In addition, another object of the present invention is to provide a fiber-reinforced resin formed product which has a desired thickness, in which occurrence of wrinkles by a reinforcement fiber is suppressed, and which has an excellent appearance and a sufficient strength.

### SOLUTION TO THE PROBLEMS

To achieve the above objects, a solution of the present invention is a cylindrical member joining method of butting a plurality of cylindrical members to join the cylindrical members, the method including: an arranging process of arranging a plurality of sheet-like reinforcement fiber base members along an outer circumferential surface of a joined portion of the cylindrical members, to form a fiber layer; a process of covering the fiber layer with a bag member and sealing the bag member to the outer circumferential surface; a process of depressurizing an inside of the sealed bag member and injecting a fluid resin into the bag member; and a process of impregnating the injected fluid resin into the fiber layer and curing or solidifying the fluid resin. In the arranging process, the reinforcement fiber base members are arranged so as to partially overlap each other.

Due to this specified matter, the reinforcement fiber base members can be arranged on the joined portion of the cylindrical members having curved surface shapes without causing any wrinkles, to form the fiber layer. In other words, since the sheet-like reinforcement fiber base members are used and arranged so as to partially overlap each other, the reinforcement fiber base members can be arranged along the outer circumferential surfaces of the cylindrical members, and occurrence of wrinkles can be prevented. In addition, even when the fiber layer is sealed and depressurized, no wrinkle occurs in the reinforcement fiber base members. Further, a predetermined thickness is ensured by increasing or decreasing the number of the reinforcement fiber base members, and thus thickness management is also easy. As a result, the plurality of cylindrical members are joined so as to have an excellent appearance and ensure a desired strength. Each reinforcement fiber base member is preferably a sheet-like piece having a size corresponding to the joined portion.

A more specific configuration of the joining method is as follows. Specifically, in the arranging process in the joining method, the plurality of reinforcement fiber base members are continuously attached in an overlap manner along the joined portion by adhering one end portion of each reinforcement fiber base member to the outer circumferential surface of the joined portion and overlaying another end portion of each reinforcement fiber base member on an outer surface of an adjacent reinforcement fiber base member.

Due to this configuration, the reinforcement fiber base members can be arranged so as to be fixed along the outer circumferential surface of the joined portion without causing any wrinkles.

Further, in the arranging process in the joining method, the reinforcement fiber base members may be arranged as being shifted from each other in a width direction and a circumferential direction of the joined portion.

Due to this configuration, the fiber layer can be smoothly connected to the outer circumferential surfaces of the cylindrical members by reinforcement fiber base members being arranged so as to be shifted from each other in the width direction, and occurrence of wrinkles can be prevented by the reinforcement fiber base members being arranged so as to be shifted from each other in the circumferential direction.

Further, in the joining method, the plurality of reinforcement fiber base members may include ones having a plurality of sizes, and in the arranging process, the reinforcement fiber base members may be arranged as being shifted from each other in a circumferential direction of the joined portion.

Due to this configuration, occurrence of wrinkles is prevented by arranging the reinforcement fiber base members such that the reinforcement fiber base members are shifted in the circumferential direction of the joined portion, and due to the difference in size between the reinforcement fiber base members, the end portions of the fiber layer in the width direction are thin and a shape that provides smooth connection to the outer circumferential surfaces of the cylindrical members can be ensured.

In this case, in order to provide the plurality of reinforcement fiber base members having a plurality of sizes, reinforcement fiber base members having different width dimensions are used, for example.

Thus, a fiber layer that is smoothly connected to the outer circumferential surfaces of the cylindrical members can be formed only by attaching the reinforcement fiber base members in an overlap manner at regular intervals.

Further, in the joining method, a length of each reinforcement fiber base member in the circumferential direction is preferably that of 1/16 to 1/2 of a length of an outer circumference of the joined portion.

In other words, when the length of one reinforcement fiber base member is too short with respect to the length of the outer circumference of the joined portion, the number of the reinforcement fiber base members increases and the amount of work increases. When the length of one reinforcement fiber base member is too long with respect to the length of the outer circumference of the joined portion, wrinkles are likely to occur. Thus, by setting the length of each reinforcement fiber base member to such a length, the reinforcement fiber base members can be arranged with excellent workability without causing any wrinkles.

Further, a configuration that in the joining method, end surfaces of the cylindrical members are obliquely cut, and the cut end surfaces are butted against each other to join the cylindrical members in a bent form, is also within the technical idea of the present invention.

Due to this configuration, the reinforcement fiber base members can be arranged also on the joined portion having a bent shape without causing any wrinkles, a joined cylindrical member having a bent shape can be formed, and an excellent appearance and an excellent strength of the joined portion can be ensured.

A solution of the present invention for attaining the above object is method of manufacturing a composite cylindrical body in which a plurality of cylindrical members are used, the method including: an arranging process of butting cut surfaces of cylindrical members in each of which an open end portion is cut or a part of an outer circumferential surface is removed, against each other, and arranging a plurality of sheet-like reinforcement fiber base members along an outer circumferential surface of a joined portion of the butted cut surfaces, to form a fiber layer; a process of covering the fiber layer with a bag member and sealing the bag member to the outer circumferential surface; a process of depressurizing an inside of the sealed bag member and injecting a fluid resin into the bag member; and a process of impregnating the injected fluid resin into the fiber layer and curing or solidifying the fluid resin. In the arranging process, the reinforcement fiber base members are arranged so as to partially overlap each other.

Due to this specified matter, the reinforcement fiber base members can be arranged on the joined portion of the cylindrical members having curved surface shapes without causing any wrinkles, to form the fiber layer. In other words, since the sheet-like reinforcement fiber base members are used and arranged so as to partially overlap each other, the reinforcement fiber base members can be arranged along the outer circumferential surfaces of the cylindrical members, and occurrence of wrinkles can be prevented. In addition, even when the fiber layer is sealed and depressurized, no wrinkle occurs in the reinforcement fiber base members. Further, a predetermined thickness is ensured by increasing or decreasing the number of the reinforcement fiber base members, and thus thickness management is also easy. As a result, a composite cylindrical body can be manufactured in which the plurality of cylindrical members are joined so as to have an excellent appearance and ensure a desired strength. Each reinforcement fiber base member is preferably a sheet-like piece having a size corresponding to the joined portion.

In the composite cylindrical body manufacturing method, a formed composite cylindrical body can be in various forms depending on the shapes of cylindrical members used.

One of them is a cylindrical body having a bent shape, which is obtained by using two cylindrical members of which open end portions are obliquely cut, and butting cut surfaces thereof against each other.

Further, one of them is a tee type cylindrical body obtained by using a first cylindrical member of which an open end portion is cut into a substantially V or U shape in a front view and a second cylindrical member of which a part of an outer circumferential surface is cut into a substantially V or U shape corresponding to a cut surface of the first cylindrical member, and butting cut surfaces thereof against each other.

Further, one of them is a tee type cylindrical body obtained by using a first cylindrical member of which an open end portion is obliquely cut and second and third cylindrical members of each of which an open end portion is cut into a substantially V or U shape in a front view, and butting cut surfaces thereof against each other.

Moreover, one of them is also a tee type cylindrical body obtained by using first and second cylindrical members of which open end portions are partially and obliquely cut and a third cylindrical member of which an open end portion is cut into a substantially V or U shape in a front view, and butting cut surfaces thereof against each other.

As described above, composite cylindrical bodies in various forms can be manufactured, it is unnecessary to design a die having a complicated shape, and a composite cylindrical body having a sufficient strength and an excellent appearance shape can be manufactured.

A more specific configuration of the composite cylindrical body manufacturing method is as follows. Specifically, in the arranging process in the manufacturing method, the plurality of reinforcement fiber base members are continuously attached in an overlap manner along the joined portion by adhering one end portion of each reinforcement fiber base member to the outer circumferential surface of the joined portion and overlaying another end portion of each reinforcement fiber base member on an outer surface of an adjacent reinforcement fiber base member.

Due to this configuration, the reinforcement fiber base members can be arranged so as to be fixed along the outer circumferential surface of the joined portion without causing any wrinkles.

Further, in the arranging process in the manufacturing process, the reinforcement fiber base members may be arranged as being shifted from each other in a width direction and a circumferential direction of the joined portion.

Due to this configuration, the fiber layer can be smoothly connected to the outer circumferential surfaces of the cylindrical members by reinforcement fiber base members being arranged so as to be shifted from each other in the width direction, and occurrence of wrinkles can be prevented by the reinforcement fiber base members being arranged so as to be shifted from each other in the circumferential direction.

Further, in the manufacturing method, the plurality of reinforcement fiber base members may include ones having a plurality of sizes, and in the arranging process, the reinforcement fiber base members may be arranged as being shifted from each other in a circumferential direction of the joined portion.

Due to this configuration, occurrence of wrinkles is prevented by arranging the reinforcement fiber base members such that the reinforcement fiber base members are shifted in the circumferential direction of the joined portion, and due to the difference in size between the reinforcement fiber base members, the end portions of the fiber layer in the width direction are thin and a shape that provides smooth connection to the outer circumferential surfaces of the cylindrical members can be ensured.

In this case, in order to provide the plurality of reinforcement fiber base members having a plurality of sizes, reinforcement fiber base members having different width dimensions are used, for example.

Thus, a fiber layer that is smoothly connected to the outer circumferential surfaces of the cylindrical members can be formed only by attaching the reinforcement fiber base members in an overlap manner at regular intervals.

Further, in the manufacturing method, a length of each reinforcement fiber base member in the circumferential direction is preferably that of 1/16 to 1/2 of a length of an outer circumference of the joined portion.

In other words, when the length of one reinforcement fiber base member is too short with respect to the length of the outer circumference of the joined portion, the number of the reinforcement fiber base members increases and the amount of work increases. When the length of one reinforcement fiber base member is too long with respect to the length of the outer circumference of the joined portion, wrinkles are likely to occur. Thus, by setting the length of each reinforcement fiber base member to such a length, the reinforcement fiber base members can be arranged with excellent workability without causing any wrinkles.

Further, in order to attain the above object, a method of forming a fiber-reinforced resin formed product having a cylindrical portion is also within the technical idea of the present invention.

In other words, a fiber-reinforced resin formed product forming method according to the present invention includes an arranging process of arranging a plurality of sheet-like reinforcement fiber base members along a circumferential surface of a forming die, to form a fiber layer; a process of covering the fiber layer with a bag member and sealing the bag member to the circumferential surface; a process of depressurizing an inside of the sealed bag member and injecting a fluid resin into the bag member; and a process of impregnating the injected fluid resin into the fiber layer and curing or solidifying the fluid resin. A length of each reinforcement fiber base member in a circumferential direction is that of 1/16 to 1/2 of a length of a circumference of the forming die, and in the arranging process, the reinforcement fiber base members are arranged so as to partially overlap each other.

Due to such a specified matter, the reinforcement fiber base members can be arranged on the circumferential surface of the forming die without causing any wrinkles, to form the fiber layer. In other words, since the plurality of reinforcement fiber base members that are sheet-like pieces each having a length corresponding to that of about 1/16 to 1/2 of the length of the circumference of the forming die are used and arranged so as to partially overlap each other, the reinforcement fiber base members can be arranged along the circumferential surface of the forming die, and occurrence of wrinkles can be prevented. In addition, even when the fiber layer is sealed and depressurized, no wrinkle occurs in the reinforcement fiber base members. Further, a predetermined thickness is ensured by increasing or decreasing the number of the reinforcement fiber base members, and thus thickness management is also easy. As a result, a fiber-reinforced resin formed product having an excellent appearance and a sufficient strength can be obtained.

A more specific configuration of the fiber-reinforced resin formed product forming method is as follows. Specifically, the forming die has a forming surface corresponding to a half-cylindrical shape, and a pair of formed bodies that have half-cylindrical shapes and that are formed by using the forming die are joined to each other to obtain a cylindrical body.

Here, the fiber layer may be formed on either of an inner circumferential surface or an outer circumferential surface of the forming die having a half-cylindrical shape. Due to the configuration, the reinforcement fiber base members can be arranged on the circumferential surface of the forming die without causing any wrinkles, and a formed body having a desired thickness, an excellent appearance, a sufficient strength, and a half-cylindrical shape can be obtained. Then, a fiber-reinforced resin formed product having an excellent appearance and a sufficient strength can easily be obtained by joining the formed bodies having half-cylindrical shapes to each other.

Further, as another configuration, the forming die is provided with forming surfaces corresponding to a cylindrical portion and a flange portion at an outer circumference of an end of the cylindrical portion, and each reinforcement fiber base member has a shape integrally having both a portion to be arranged on the forming surface corresponding to the cylindrical portion of the forming die and a portion to be arranged on the forming surface corresponding to the flange portion.

Due to such a configuration, the reinforcement fiber base members can be arranged on the forming die having the forming surfaces corresponding to the cylindrical portion and the flange portion, respectively, without causing any wrinkles, and a flanged pipe-like fiber-reinforced resin formed product having a desired thickness, an excellent appearance, and a sufficient strength can be obtained.

A more specific configuration of the fiber-reinforced resin formed product forming method is as follows. Specifically, in the arranging process in the forming method, the plurality of reinforcement fiber base members are continuously attached in an overlap manner along the circumferential surface by adhering one end portion of each reinforcement fiber base member to the forming die and overlaying another end portion of each reinforcement fiber base member on an outer surface of an adjacent reinforcement fiber base member.

Due to this configuration, the reinforcement fiber base members can be arranged so as to be fixed along the circumferential surface of the forming die without causing any wrinkles.

Further, in the arranging process in the forming method, the reinforcement fiber base members may be arranged as being shifted in the circumferential direction.

Due to this configuration as well, the reinforcement fiber base members can be arranged so as to be fixed along the circumferential surface of the forming die without causing any wrinkles.

Further, in the arranging process in the forming method, to the forming die having the cylindrical portion and the flange portion, the reinforcement fiber base members are arranged as being bent along a boundary between the cylindrical portion and the flange portion of the forming die, and are attached in an overlap manner along an outer circumferential surface of the cylindrical portion and a surface of the flange portion.

Due to such a configuration, the reinforcement fiber base members can be arranged on the forming die having the cylindrical portion and the flange portion without causing any wrinkles, and a flanged pipe-like fiber-reinforced resin formed product having a desired thickness, an excellent appearance, and a sufficient strength can be obtained.
Additionally, a formed product that is a composite cylindrical body manufactured by the composite cylindrical body manufacturing method according to the solution described above is also within the technical idea of the present invention.

Further, a tee type formed product obtained by using the fiber-reinforced resin formed product forming method according to the solution described above is also within the technical idea of the present invention.

Further, an elbow type formed product obtained by using the fiber-reinforced resin formed product forming method according to the solution described above is also within the technical idea of the present invention.
Further, a flanged cylindrical formed product obtained by using the fiber-reinforced resin formed product forming method according to the solution described above is also within the technical idea of the present invention.

Thus, a fiber-reinforced resin formed product which is formed with a desired thickness, in which occurrence of wrinkles by the reinforcement fiber is suppressed, and which has an excellent appearance and a sufficient strength can be obtained.

### ADVANTAGEOUS EFFECTS OF THE INVENTION

According to the present invention configured as described above, thickness management of a formed product is made easy, and a desired product in which no wrinkle occurs by the reinforcement fiber, which has an excellent appearance, and which retains a desired strength can be efficiently obtained without depending on the level of skill of an operator.

### BRIEF DESCRIPTION OF THE DRAWINGS

[FIG. 1] FIG. 1 is a perspective view showing one process of a method of joining cylindrical members according to Embodiment lof the present invention.
[FIG. 2] FIG. 2 is a perspective view showing the next process of FIG. 1.
[FIG. 3] FIG. 3 is a cross-sectional view showing a joined portion according to the next process of FIG. 2.
[FIG. 4] FIG. 4 is a cross-sectional view showing a joined portion in a state where an outer layer base member shown in FIG. 3 is wound.
[FIG. 5] FIG. 5 is a perspective view showing the joined portion in FIG. 4.
[FIG. 6] FIG. 6 is a perspective view showing a joined portion according to the next process of FIG. 5.
[FIG. 7] FIG. 7 is a cross-sectional view showing a joined portion according to the next process of FIG. 6.
[FIG. 8] FIG. 8 is a perspective view showing a joined portion according to the next process of FIG. 7.
[FIG. 9] FIG. 9 is a side view schematically showing a state of FIG. 8.
[FIG. 10] FIG. 10 is a perspective view showing a joined portion according to the next process of FIG. 8.
[FIG. 11] FIG. 11 is an illustration diagram showing the joined portion in FIG. 10 by a partial cross-section.
[FIG. 12] FIG. 12 is a partial cross-sectional view showing one process of a method of joining cylindrical members according to Embodiment 2 of the present invention.
[FIG. 13] FIG. 13 is an illustration diagram showing a method of manufacturing a composite cylindrical body according to Embodiment 3 of the present invention, in which a situation where cylindrical members are butted against each other and joined to each other is viewed from the front.
[FIG. 14] FIG. 14 is an illustration diagram showing a situation where a plurality of reinforcement fiber base members are arranged along a joined portion of the cylindrical members in FIG. 13.
[FIG. 15] FIG. 15 is an illustration diagram showing another example of the method of manufacturing a composite cylindrical body according to Embodiment 3 of the present invention.
[FIG. 16] FIG. 16 is an illustration diagram showing still another example of the method of manufacturing a composite cylindrical body according to Embodiment 3 of the present invention.
[FIG. 17] FIG. 17 is an illustration diagram showing a process of arranging the reinforcement fiber base members in Embodiment 3.
[FIG. 18] FIG. 18 is an illustration diagram showing another example of the process of arranging the reinforcement fiber base members.
[FIG. 19] FIG. 19 is an illustration diagram showing still another example of the process of arranging the reinforcement fiber base members.
[FIG. 20] FIG. 20 is a perspective view of a formed product obtained by the method of manufacturing a composite cylindrical body according to Embodiment 3.
[FIG. 21] FIG. 21 is a cross-sectional view showing one process of a method of forming a fiber-reinforced resin formed product according to Embodiment 4 of the present invention.
[FIG. 22] FIG. 22 is a cross-sectional view showing the next process of FIG. 21.
[FIG. 23] FIG. 23 is a cross-sectional view showing a state after the process in FIG. 22.
[FIG. 24] FIG. 24 is a cross-sectional view showing the next process of FIG. 23.
[FIG. 25] FIG. 25 is a cross-sectional view showing the next process of FIG. 24.
[FIG. 26] FIG. 26 is a cross-sectional view showing the next process of FIG. 25.
[FIG. 27] FIG. 27 is one example of a forming die used in a method of forming a fiber-reinforced resin formed product according to Embodiment 5 of the present invention.
[FIG. 28] FIG. 28 is another example of the forming die used in the method of forming a fiber-reinforced resin formed product according to Embodiment 5.
[FIG. 29] FIG. 29 is a cross-sectional view showing one process of the method of forming a fiber-reinforced resin formed product according to Embodiment 5.
[FIG. 30] FIG. 30 is an illustration diagram showing the next process of FIG. 29.
[FIG. 31] FIG. 31 is a cross-sectional view showing another example of the method of forming a fiber-reinforced resin formed product according to Embodiment 5.
[FIG. 32] FIG. 32 is a cross-sectional view showing the next process of FIG. 31.
[FIG. 33] FIG. 33 is a partially enlarged cross-sectional view showing sill another example of the method of forming a fiber-reinforced resin formed product according to Embodiment 5.
[FIG. 34] FIG. 34 is a perspective view showing one example of a forming die in a method of forming a fiber-reinforced resin formed product according to Embodiment 6 of the present invention.
[FIG. 35] FIG. 35 is plan views showing examples, respectively, of a reinforcement fiber base member in Embodiment 6.
[FIG. 36] FIG. 36 is a perspective view schematically showing one process of the forming method according to Embodiment 6 and a situation where base members are attached to the forming die in an overlap manner.
[FIG. 37] FIG. 37 is a cross-sectional view schematically showing a state prior to resin injection in the forming method according to Embodiment 6.
[FIG. 38] FIG. 38 is a perspective view showing a formed product obtained in Embodiment 7 of the present invention.
[FIG. 39] FIG. 39 is a plan view showing one example of a reinforcement fiber base member in Embodiment 7.
[FIG. 40] FIG. 40 is a cross-sectional view showing a state where the base members in FIG. 39 are laminated.
[FIG. 41] FIG. 41 is a perspective view showing one example of a forming die in Embodiment 7.
[FIG. 42] FIG. 42 is an illustration diagram schematically showing one forming process using the forming die shown in FIG. 41.
[FIG. 43] FIG. 43 is an illustration diagram showing the subsequent process of FIG. 42 by a cross-section.

### DESCRIPTION OF EMBODIMENTS

Hereinafter, each of embodiments of a method of joining cylindrical members, a method of manufacturing a composite cylindrical body, a method of forming a fiber-reinforced resin formed product, and formed products obtained by using these methods, according to the present invention, will be described with reference to the drawings.

Hereinafter, first, an outline of each of processes in a plurality of methods for obtaining a formed product according to the present invention will be described, and then each of configurations of the method of joining cylindrical members, the method of manufacturing a composite cylindrical body, and the method of forming a fiber-reinforced resin formed product will be described.

### -Outline of processes-

In order to obtain the formed product according to the present invention, an arranging process of arranging a plurality of reinforcement fiber base members on a surface of a laminated body such as a cylindrical member or a forming die to form a fiber layer, a process of covering the fiber layer with a bag member and sealing the bag member to the outer circumferential surface, a process of depressurizing the inside of the sealed bag member and injecting a fluid resin into the bag member, and a process of impregnating the injected fluid resin into the fiber layer and curing or solidifying the fluid resin, are performed.

First, in the arranging process, each reinforcement fiber base member is not a piece having a length similar to that of a roll-like piece but is a sheet-like piece obtained by cutting to have an appropriate size, and a plurality of the sheet-like pieces are used. Specifically, examples of the reinforcement fibers constituting the reinforcement fiber base members include glass fiber, carbon fiber, and aramid fiber. Examples of the reinforcement fiber base members include knitted/woven fabrics such as glass cloth, carbon cloth, and Kevlar cloth, nonwoven fabrics, chopped strand mats, stitch mats, stitch cloths, or sandwich structural materials obtained by combining them.

The size of one reinforcement fiber base member that is a sheet-like piece may have a length corresponding to that of about 1/6 to 1/2 of the total length of a portion where the reinforcement fiber base members are arranged (e.g., the length of the outer circumference of a joined portion of cylindrical members), or may have a length corresponding to that of about 1/16 to 1/6 of the total length that is further highly divided.

In the arranging process, the reinforcement fiber base members are arranged on the laminated body so as to partially overlap each other. Specific examples of the laminated body will be described individually in a description of each method that is given below.

As the method of arranging the plurality of reinforcement fiber base members such that they partially overlap each other, there are various forms. For example, there is a method in which the plurality of reinforcement fiber base members are continuously attached in an overlap manner by adhering one end portion of each reinforcement fiber base member to the laminated body and overlaying the other end of each reinforcement fiber base member on an outer surface of an adjacent reinforcement fiber base member.

In addition, there is also a method in which the reinforcement fiber base members are arranged as being shifted from each other in a width direction and a circumferential direction of the joined portion. Further, the plurality of reinforcement fiber base members may include ones having a plurality of sizes, and the reinforcement fiber base members having different sizes may be arranged as being shifted from each other in the circumferential direction of the laminated body.

On the fiber layer formed thus, a release member and a resin spreading member are further arranged.

The release member serves to increase the releasability of the cured resin and is a sheet member formed from a material that is non-adhesive to the resin to be injected.

The resin spreading member is a net-like sheet member or the like for prompting spread of the injection resin, and causes an injected fluid resin (hereinafter, may also be referred to as injection resin) to be uniformly impregnated into the reinforcement fiber base members. The resin spreading member may not be used, when the injection resin is easily spread depending on conditions such as the type and thickness of the reinforcement fiber base members.

Further, a depressurizing line for causing the inside of the bag member to be in a depressurized state is arranged, and a resin injection line is arranged on the resin spreading member or the like.

The depressurizing line is connected to a depressurizing source such as a vacuum pump. As the depressurizing line, for example, a hollow porous pipe or a pipe obtained by spirally winding a long strip member to form into a pipe shape can be used. The depressurizing line is fixed at a predetermined position near the fiber layer by using a pressure-sensitive adhesive material, a sealing tape, or the like.

The injection line is a line that connects a connector, which supplies the resin from a resin storage tank, to a resin inlet. For example, preferably, a resin injection hose, a rubber pipe, or the like is used as the injection line, inserted into the bag member, and located so as to be in contact with the resin spreading member.

Next, the fiber layer and the like formed thus are covered with the bag member. The bag member is preferably a film member made of an airtight synthetic resin that is generally used in this type of the forming method. Then, the bag member is closely fixed to the laminated body by using a sealing member such as a pressure-sensitive adhesive material, to seal the fiber layer and the like. Thus, a hermetic seal is provided between the laminated body and the bag member.

Next, in a depressurized environment, the fluid resin is injected into the bag member. The injected fluid resin is smoothly impregnated into the fiber layer due to the depressurized environment. The injection resin is preferably, for example, a thermosetting resin such as a low-viscosity vinylester resin, an unsaturated polyester resin, a vinylester resin, an epoxy resin, a phenol resin, an isocyanate resin, or a bismaleimide resin, but may be a thermoplastic resin. They are adjusted in viscosity as appropriate by an ordinary method, and are used.

The resin injection is started after the inside of the bag member reaches a predetermined depressurized environment and it is confirmed that there is no wrinkle in the reinforcement fiber base members. When a thermosetting fluid resin is used as the injection resin, forming is performed with heating, and when a curing agent is added to the injection resin, the injected resin is subsequently cured and forming is performed. When a thermoplastic fluid resin is used, the resin that is heated until liquefied is injected, and then cooling is performed to solidify the injection resin.

Thus, various formed products are obtained each of which has a desired thickness, in each of which occurrence of wrinkles by the reinforcement fiber is suppressed, and each of which has an excellent appearance and a sufficient strength.

### -Method of joining cylindrical members-

### <Embodiment 1>

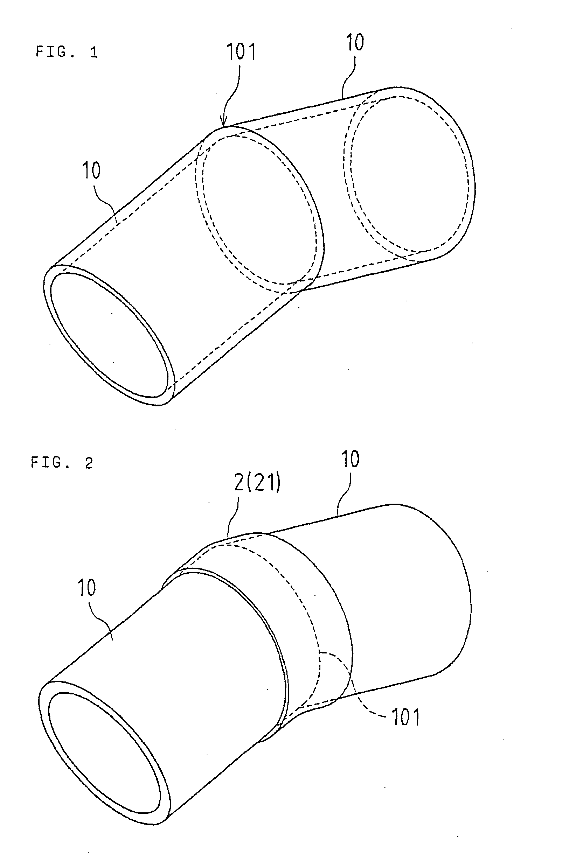

Next, a method of joining cylindrical members according to Embodiment 1 of the present invention will be described with reference to the drawings. FIGS. 1 to 11 are diagrams illustrating the method of joining cylindrical members according to Embodiment 1. In the present embodiment, the case of joining two resin pipes 10 as an example of the cylindrical members will be described. It should be noted that in the drawings described below, each member is schematically drawn such that its thickness is emphasized, in order that each member is clearly viewed.

As shown in FIG. 1, first, the resin pipes 10, which are the objects to be joined, are arranged such that pipe end surfaces (opening end portions) thereof are butted against each other. The pipe end surface of each resin pipe 10 is an obliquely cut surface. The resin pipes 10 are joined such that such pipe end surfaces thereof are butted against each other, to form a bent pipe having a shape that is bent at a joined portion 101.

As shown in FIG. 2, in a state where the pipe end surfaces of the resin pipes 10 are butted against each other, a reinforcement fiber base member 2 is arranged on the joined portion 101 so as to extend over both of the resin pipes 10. In the exemplified form, the reinforcement fiber base member 2 includes an inner layer base member 21 that is wound along an outer circumferential surface of the joined portion 101 in its circumferential direction, and a plurality of sheet-like outer layer base members 22 that are arranged in an overlap manner radially outward of the inner layer base member 21. In the state shown in FIG. 2, first, the inner layer base member 21 of the reinforcement fiber base member 2 is arranged on the joined portion 101.

Specifically, the inner layer base member 21 is a binder that is wound directly on the outer circumferential surface of the joined portion 101. For example, the inner layer base member 21 is preferably a base member that is obtained by forming a reinforcement fiber material into a chopped strand mat form and performing stitch processing of this and that is formed into a sheet shape. When the inner layer base member 21 is a stitch base member made of a chopped strand mat as described above, the inner layer base member 21 has a shape retention property due to the force of a stitch yam and thus has an excellent followability to the outer circumferential surfaces of the resin pipes 10.

Further, each of the outer layer base members 22 of the reinforcement fiber base member 2 is, for example, a sheet-like fiber base member that is a woven fabric or a nonwoven fabric that is obtained by using, as a weft, a roving formed by paralleling fiber strands obtained by collecting reinforcement fiber filaments.

As described above, initially, the inner layer base member 21 of the reinforcement fiber base member 2 is wound in the circumferential direction along the outer circumferential surface of the joined portion 101 of the resin pipes 10. The inner layer base member 21 is arranged so as to closely contact with the joined portion 101. The width (an arranged length in the axial directions of the resin pipes 10) of the inner layer base member 21 is a size corresponding to the joined portion 101, and a width required to laminate and join a resin is selected as this width.

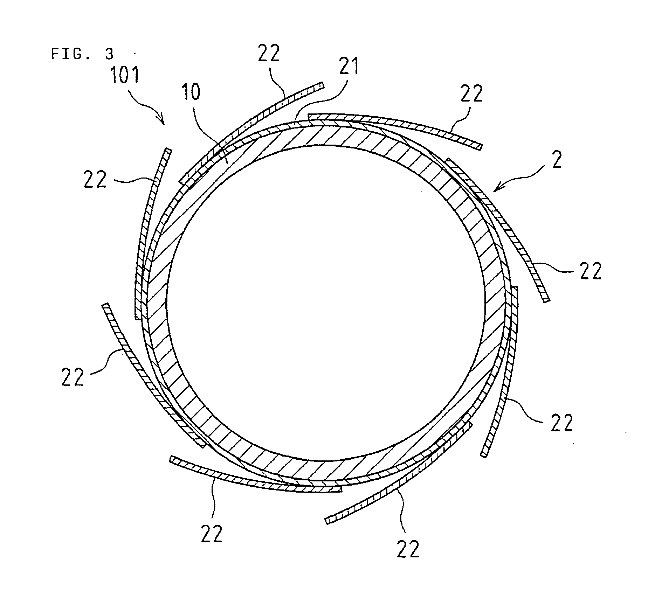

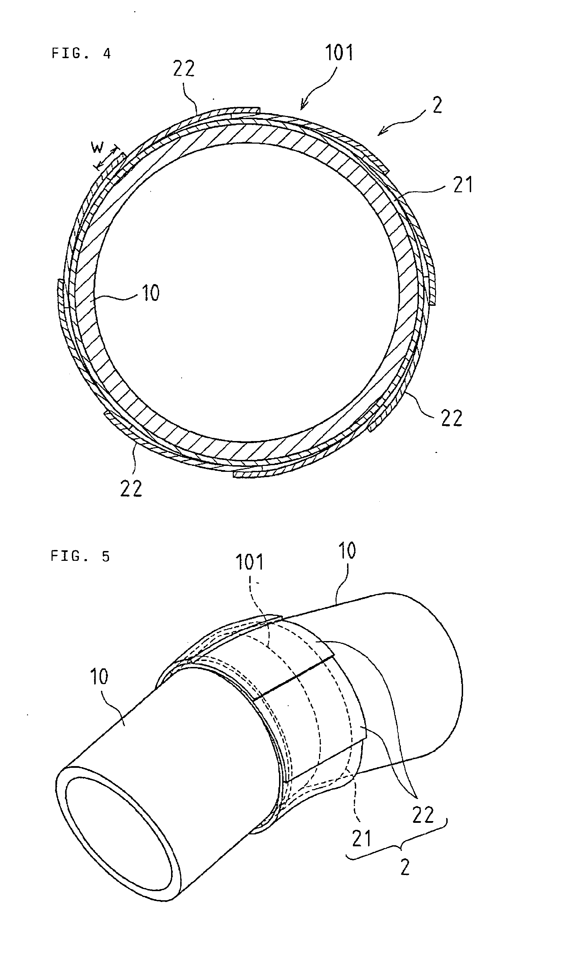

Subsequently, as shown in FIGS. 3 and 4, the plurality of sheet-like outer layer base members 22 are attached in an overlap manner in order, to the outer circumference of the inner layer base member 21 wound in the circumferential direction of the joined portion 101. Each outer layer base member 22 is a rectangular sheet-like piece having a size corresponding to the joined portion 101 of the resin pipes 10. In other words, each outer layer base member 22 is formed by cutting, so as to have a length corresponding to that of about 1/16 to 1/2 of the length of the outer circumference of the joined portion 101.

In the exemplified form, each outer layer base member 22 is obtained by cutting, so as to have a size corresponding to the length obtained by dividing the length of the outer circumference of each resin pipe 10 by about six to two. The width of each outer layer base member 22 is substantially the same as the width of the inner layer base member 21. Particularly, in order to attach the outer layer base members 22 to the joined portion 101 in an overlap manner such that no wrinkle occurs, each outer layer base member 22 is preferably formed such that its length in the circumferential direction is equal to or less than 600 mm.

In the process of arranging the outer layer base members 22, one end of one outer layer base member 22 in the circumferential direction is adhered and fixed to the inner layer base member 21. In addition, the other end of one outer layer base member 22 in the circumferential direction is not adhered to the inner layer base member 21 and is merely overlaid on the outer surface of the inner layer base member 21.

Here, the outer layer base members 22 are arranged such that with respect to the outer circumferential shape of the joined portion 101 that is a circular shape or an elliptic shape, a direction in which one outer layer base member 22 is arranged coincides with the circumferential direction of the joined portion 101. When each outer layer base member 22 is located in this circumferential direction, one end (one side) in the arranged direction is referred to as one end of the outer layer base member 22 in the circumferential direction, and another end (a side opposing this side) is referred to as another end of the outer layer base member 22.

As shown in FIG. 3, the plurality of outer layer base members 22 are arranged so as to be wound in the circumferential direction on the outer surface of the previously-wound inner layer base member 21. Specifically, one outer layer base member 22 is set along the circumferential direction of the joined portion 101, and one end side of the outer layer base member 22 in the circumferential direction is adhered and fixed to the outer surface of the inner layer base member 21. In addition, the other end side of the outer layer base member 22 in the circumferential direction is not adhered and is merely overlaid along the outer shapes of the resin pipes 10. Similarly, for an outer layer base member 22 to be subsequently arranged, one end side thereof in the circumferential direction is adhered to the inner layer base member 21, and the other end side is not adhered but overlaid on the outer surface of another outer layer base member 22 adjacent thereto. This process is repeated.

It should be noted that for arranging and fixing the reinforcement fiber base member 2, a spray paste or the like can be used for the inner layer base member 21 and the outer layer base members 22.

In this manner, as shown in FIG. 4, the plurality of outer layer base members 22 are attached in an overlap manner to the outer surface of the inner layer base member 21. The outer layer base members 22 are laminated in order as each of the arranged positions thereof is shifted in the circumferential direction by a regular amount. An overlap length w by which one outer layer base member 22 overlaps another outer layer base member 22 adjacent thereto when laminated is ensured to be a length equal to or larger than that of 1/10 of the length of one outer layer base member 22. It should be noted that arranged positions that cause a state where the outer layer base members 22 do not overlap each other and their ends are in contact with each other or the outer layer base members 22 are spaced apart from each other are not preferred for obtaining a strength provided by the outer layer base members 22.

As shown in FIG. 5, by the arranging process described above, the reinforcement fiber base member 2 can be laminated such that a predetermined thickness is ensured.

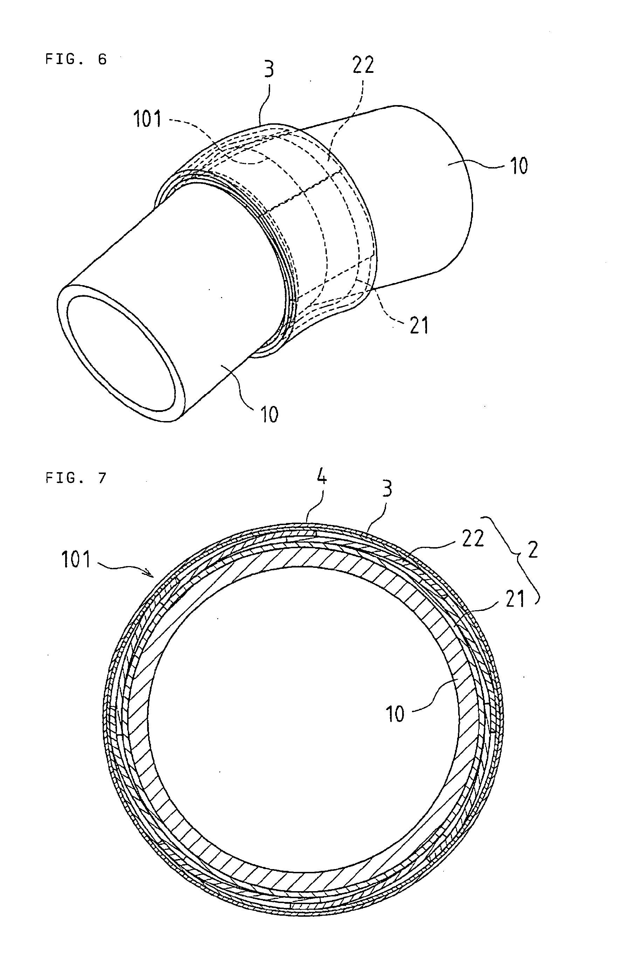

Next, a stretchable nonwoven fabric 3 is wound on the outer surfaces of the laminated outer layer base members 22. As shown in FIG. 6, the stretchable nonwoven fabric 3 presses the plurality of outer layer base members 22 against the outer circumferential surfaces of the resin pipes 10 to fix the outer layer base members 22 thereto.

Each outer layer base member 22 is adhered and fixed only at the one end side thereof in the circumferential direction, but stably maintains the laminated state by being pressed by the stretchable nonwoven fabric 3. Further, the other end side of each outer layer base member 22 in the circumferential direction is merely overlaid on the adjacent outer layer base member 22. Thus, when the nonwoven fabric 3 is wound, the outer layer base members 22 are fixed along the outer circumference of the joined portion 101 without causing unwanted wrinkles.

Next, as shown in FIG. 7, a release fabric 4 is arranged on the outer surface of the nonwoven fabric 3 wound at the joined portion 101.

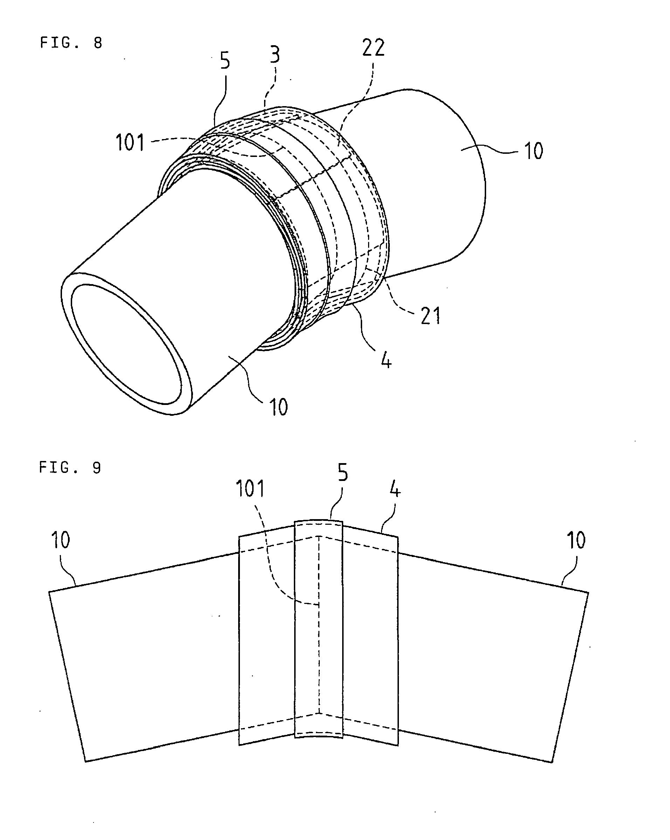

Further, as shown in FIGS. 8 and 9, a resin spreading member 5 is arranged on the outer surface of the release fabric 4.

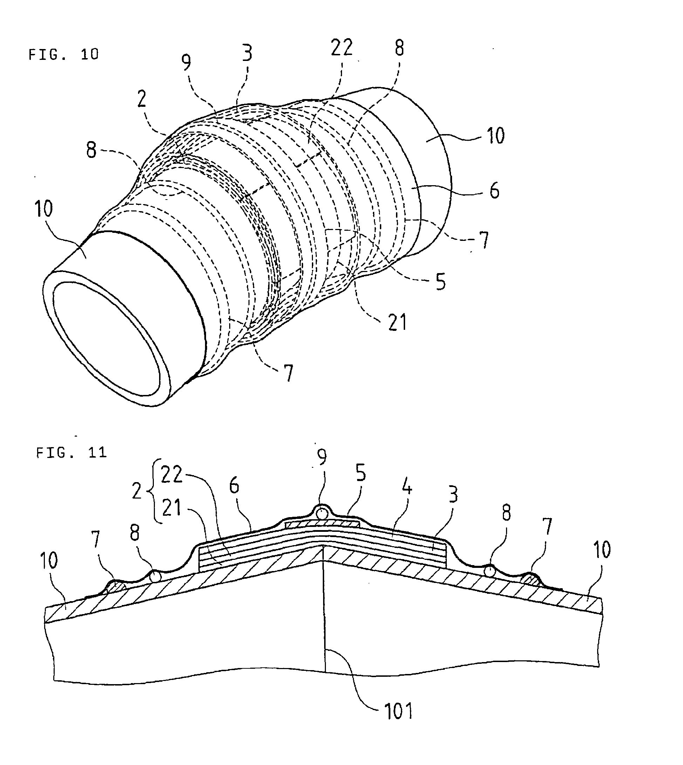

Next, as shown in FIGS. 10 and 11, depressurizing lines 8 are located on both sides in the width direction of a fiber layer that is the reinforcement fiber base member 2. In addition, an injection pipe 9 for an injection resin is located on the outer surface of the resin spreading member 5. A plurality of injection pipes 9 may be located at appropriate intervals according to the size of the joined portion 101, the size of the fiber layer, and the like.

Next, the reinforcement fiber base member 2 (fiber layer), the stretchable nonwoven fabric 3, the release fabric 4, the resin spreading member 5, and the depressurizing lines 8, and the injection pipe 9 are hermetically covered with a bag film 6 on the outer circumferential surfaces of the resin pipes 10 (see FIG. 11). The bag film 6 is adhered to a portion surrounding the fiber layer outward of the depressurizing lines 8 by using a sealing member 7 such as a pressure-sensitive adhesive material or a sealing tape. Thus, a hermetically-closed formed portion is formed between the resin pipes 10 and the bag film 6.

Prior to resin injection, a depressurized environment is provided in the bag film 6 by sucking the inside of the bag film 6 with a depressurizing source connected to the depressurizing lines 8. At that time, it is confirmed that no wrinkle occurs in the laminated reinforcement fiber base member 2 (particularly, in the outer layer base members 22). The outer layer base members 22 attached in an overlap manner are fixed at the one end sides thereof in the circumferential direction and are not fixed at the other end sides thereof in the circumferential direction. Thus, even when the outer layer base members 22 are sealed with the bag film 6 and depressurized so as to cause wrinkles in the outer layer base members 22, the wrinkles can be moved to the non-adhered other end sides of the outer layer base members 22 and removed. As a result, occurrence of wrinkles in the reinforcement fiber base member 2 can be effectively prevented. In addition, at that time, the thickness is measured by direct touching to confirm whether or not the reinforcement fiber base member 2 has a predetermined thickness. If any defect is found as a result of the confirmation, the working operation can be interrupted to correct the defect prior to the resin injection.

Then, in this depressurized environment, the resin is supplied from the injection pipe 9 and spread inside the bag film 6 (in the formed portion). The injected resin is spread uniformly and entirely through the resin spreading member 5 and impregnated into the nonwoven fabric 3 and the reinforcement fiber base member 2.

When the resin injection is completed, the injection resin is cured with the depressurized state in the bag film 6 maintained. Thus, the reinforcement fiber base member 2 and the like are impregnated and integrated with the injection resin.

When the resin is completely cured, joining of the joined portion 101 is completed. It should be noted that the inner circumferential surface of the joined portion 101 may be previously subjected to inner surface treatment by laminating a resin by a hand lay-up method or the like.

Thus, the resin pipes 10 can easily be joined to each other such that the pipe end surfaces thereof are butted against each other. In addition, such a bent pipe having a bent portion can be obtained by joining. Moreover, the reinforcement fiber base member 2 can be arranged in the bag film 6 without causing any wrinkles, the forming operation can be efficiently progressed in a short time, and the appearance and strength of the joined portion can also be excellent. The joining method can be applied to any cylindrical members in addition to straight pipes and short pipes, and can be suitably used, for example, for joint pipes and branch pipes such as tees as described below.

### <Embodiment 2>

Next, a method of joining cylindrical members according to Embodiment 2 of the present invention will be described with reference to the drawings. The method of joining resin pipes 10 that will be described in the present embodiment is the same in basic configuration as that in Embodiment 1 described above, and is characterized in a form of arranging the outer layer base members 22 of the reinforcement fiber base member 2. Thus, the form of arranging the outer layer base members 22 will be described in detail, and the other components are designated by the same reference numerals as those in Embodiment 1 described above and the description thereof is omitted.

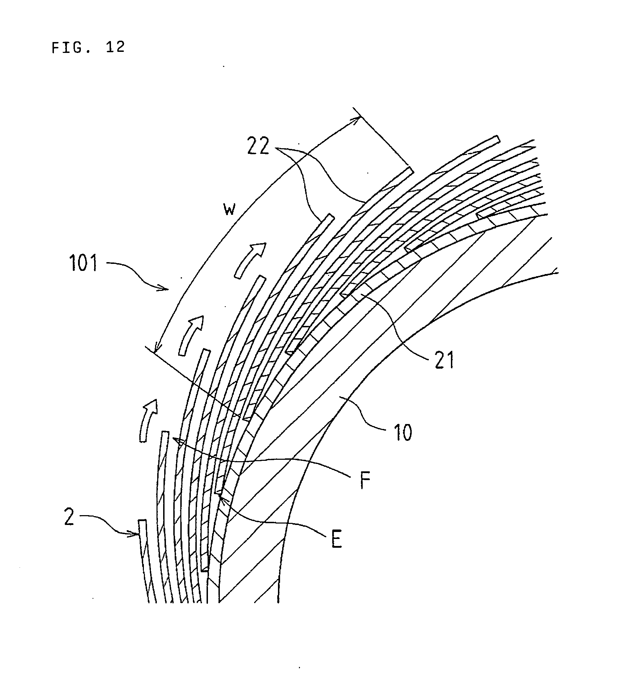

FIG. 12 is a partial cross-sectional view showing one process of the method of joining cylindrical members according to Embodiment 2 and shows, in an enlarged manner, a cross section of the joined portion 101 in a process corresponding to FIG. 3.

In the present embodiment, a large number of the sheet-like outer layer base members 22 are attached in an overlap manner, to the outer surface of the inner layer base member 21 arranged along the outer circumferential surface of the joined portion 101, to form a multilayer structure, thereby increasing the thickness of the outer layer base members 22 and forming a uniform outer circumferential surface.

In this case as well, a plurality of the sheet-like outer layer base members 22 are attached in an overlap manner in order as being each shifted in the circumferential direction of the joined portion 101 by a regular amount. At that time, each outer layer base member 22 is adhered and fixed at one end side thereof in the circumferential direction to the inner layer base member 21, and is not adhered at the other end side thereof in the circumferential direction to the inner layer base member 21, similarly to Embodiment 1.

As shown in FIG. 12, a plurality of the outer layer base members 22 are arranged in the circumferential direction in an overlap manner on the outer surface of the previously-wound inner layer base member 21. At that time, an overlap length w by which each outer layer base member 22 overlaps another outer layer base member 22 adjacent thereto is larger than that in Embodiment 1. In other words, the amount by which one outer layer base member 22 is shifted in the circumferential direction from another outer layer base member 22 adjacent thereto is decreased to ensure a large overlap area.

Here, in a fiber layer of the multilayered outer layer base members 22, a laminated form where the position of an end of an outer layer base member 22 in the circumferential direction coincides with the position of an end of an outer layer base member 22 of any other layer in the circumferential direction is not preferred. This is because there is the possibility that the strength decreases at a portion where ends of the outer layer base members 22 of different layers coincide with each other. Therefore, as shown in FIG. 12, one end E of any outer layer base member 22 in the circumferential direction and another end F of any other outer layer base member 22 are located so as to be shifted from each other in the circumferential direction. Then, a regular overlap length w of the outer layer base members 22 is ensured throughout the circumference of the joined portion 101.

Thus, a large number of the outer layer base members 22 can easily be laminated such that a desired thickness is ensured. In addition, a joined portion having a uniform thickness can be formed. In the next process, the stretchable nonwoven fabric 3 is wound on the outer surfaces of the outer layer base members 22.

Further, similarly to Embodiment 1 described above, the nonwoven fabric 3, the release fabric 4, and the like are arranged and hermetically covered with the bag film 6. A large number of the outer layer base members 22 attached in an overlap manner are fixed at the one end sides thereof in the circumferential direction and are not fixed at the other end sides thereof in the circumferential direction. Thus, even when the outer layer base members 22 are sealed with the bag film 6 and depressurized, no wrinkle occurs in the outer layer base members 22, and wrinkles can be moved in a direction indicated by arrows in FIG. 12 and removed. As a result, occurrence of wrinkles can be effectively prevented. Further, at that time, the thickness can be measured by direct touching to confirm whether or not the reinforcement fiber base member 2 has a predetermined thickness. If any defect is found as a result of the confirmation, the working operation can be interrupted to correct the defect prior to the resin injection.

### -Method of manufacturing composite cylindrical body-

### <Embodiment 3>

Next, a method of manufacturing a composite cylindrical body according to Embodiment 3 of the present invention will be described with reference to the drawings. In the manufacturing method, a composite cylindrical body in which a plurality of cylindrical members are used is manufactured.

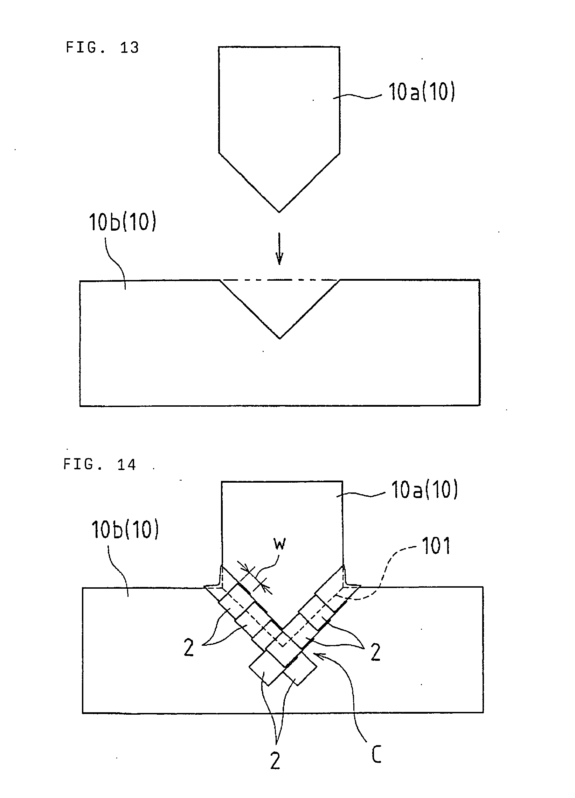

FIG. 13 is an illustration diagram in which a situation where cylindrical members 10 are butted against each other and joined to each other is viewed from the front. FIG. 14 is an illustration diagram showing a situation where a plurality of reinforcement fiber base members 2 are arranged along a joined portion 101.

For example, as shown in FIG. 13, cut surfaces of the cylindrical members 10 in each of which an open end potion is cut or a part of an outer circumferential surface is removed are butted against each other. Then, as shown in FIG. 14, the plurality of reinforcement fiber base members 2 are arranged along the outer circumferential surface of the joined portion 101 where the cut surfaces are butted against each other, to form a fiber layer (an arranging process).

This embodiment is characterized in the shapes of the cut cylindrical members 10 and the process of arranging the reinforcement fiber base members 2. In other words, this manufacturing method includes a process of covering the fiber layer with a bag member and sealing the bag member to the outer circumferential surfaces of the cylindrical members 10, a process of depressurizing the inside of the sealed bag member and injecting a fluid resin into the bag member, and a process of impregnating the injected fluid resin into the fiber layer and curing or solidifying the fluid resin. However, these processes are the same as those described above. Thus, in the following, the detailed description of these processes is omitted, and the cylindrical members 10 and the reinforcement fiber base members 2 will be mainly described.

### (Variations of cylindrical members 10)

The cylindrical members 10 are various in the form of cutting the open end portion or in the form of removing the outer circumferential surface, and various composite cylindrical bodies can be manufactured by combining them. In other words, a composite cylindrical body obtained by this manufacturing method is also within the technical idea of the present invention.

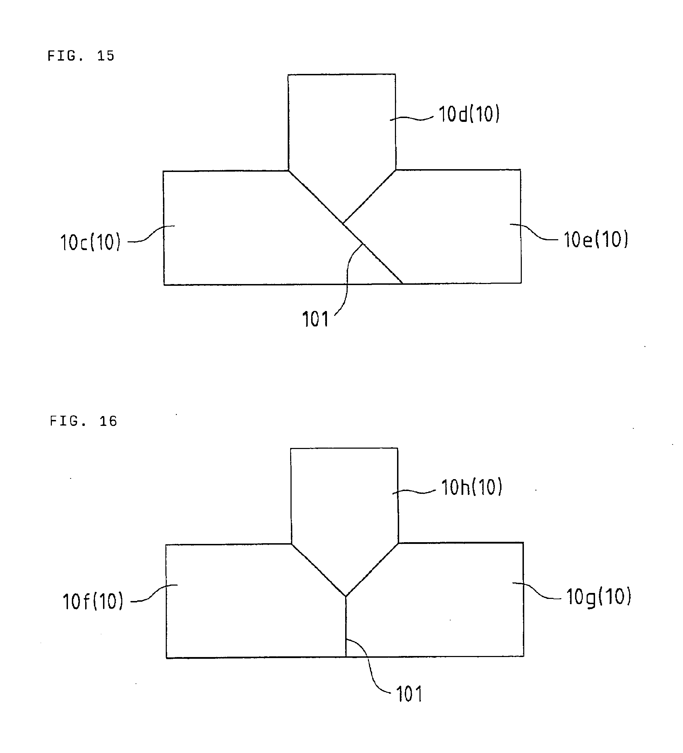

The cylindrical members 10 are exemplified as follows.
(1) Two cylindrical members 10 of which open end portions are obliquely cut are butted against each other to obtain a cylindrical body having a bent shape. This follows the same processes as those shown in FIGS. 1 to 11.
(2) A first cylindrical member of which an open end portion is cut into a substantially V or U shape in a front view and a second cylindrical member of which a part of an outer circumferential surface is cut into a substantially V or U shape corresponding to the cut surface of the first cylindrical member are butted against each other to obtain a tee type cylindrical body. This is an example shown in FIG. 13.
(3) A first cylindrical member of which an open end portion is obliquely cut and second and third cylindrical members of each of which an open end portion is cut into a substantially V or U shape in a front view are butted against each other to obtain a tee type cylindrical body. This is an example shown in FIG. 15.
(4) First and second cylindrical members of which open end portions are partially and obliquely cut and a third cylindrical member of which an open end portion is cut into a substantially V or U shape in a front view are butted against each other to obtain a tee type cylindrical body. This is an example shown in FIG. 16.

### (Form of arranging reinforcement fiber base members 2)

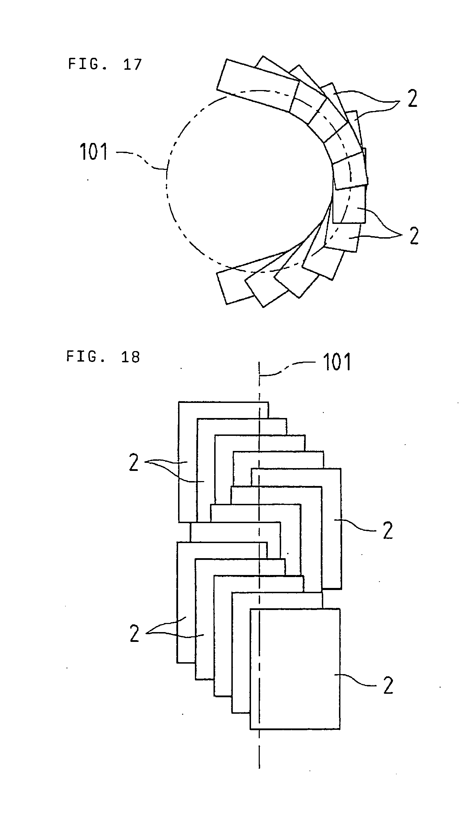

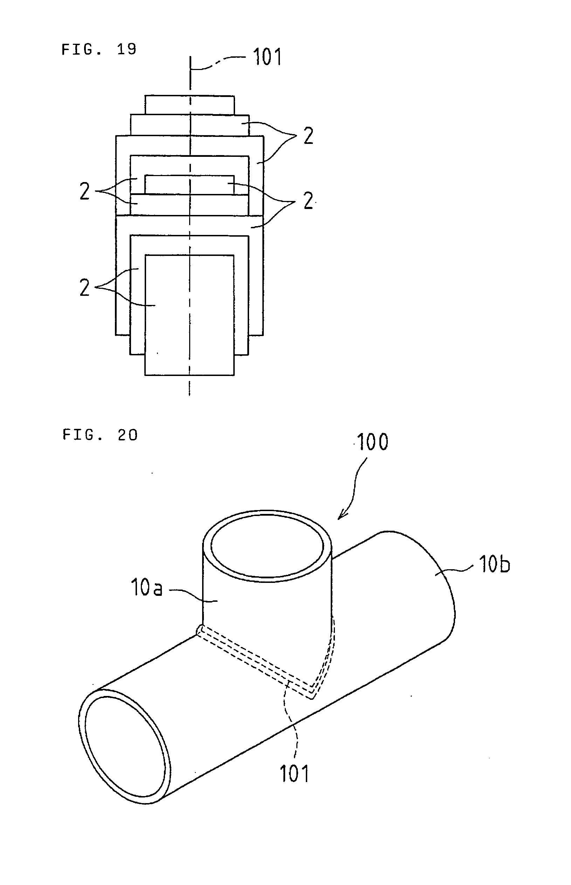

Further, in the method of manufacturing a composite cylindrical body according to the present invention, each reinforcement fiber base member 2 is a sheet-like piece having a size corresponding to the joined portion 101, and in the arranging process, the reinforcement fiber base members 2 are arranged so as to partially overlap each other. At that time, the plurality of reinforcement fiber base members 2 are continuously attached in an overlap manner along the joined portion 101 by adhering one end of each reinforcement fiber base member 2 and overlaying the other end thereof on the outer surface of an adjacent reinforcement fiber base member 2, similarly to Embodiments 1 and 2 described above. Further, examples of the mode of arranging the reinforcement fiber base members 2 include the following forms.
(5) The reinforcement fiber base members are arranged as being shifted in the circumferential direction of the joined portion. This is an example shown in FIG. 17.
(6) The reinforcement fiber base members are arranged as being shifted in the width direction and the circumferential direction of the joined portion. This is an example shown in FIG. 18.
(7) The plurality of reinforcement fiber base members include ones having a plurality of sizes, and the reinforcement fiber base members are arranged as being shifted in the circumferential direction of the joined portion. This is an example shown in FIG. 19.
(8) A plurality of the reinforcement fiber base members include ones having different width dimensions, and the reinforcement fiber base members are arranged as being shifted in the circumferential direction of the joined portion. This is the example shown in FIG. 19.

In the method of manufacturing a composite cylindrical body according to Embodiment 3, a composite cylindrical body having a complicated shape such as having a bent portion can be manufactured by selecting and combining such variations (1) to (4) of the cylindrical members 10 and such forms (5) to (8) of arranging the reinforcement fiber base members 2 as appropriate. Here, some examples among others will be described, but this manufacturing method is not limited to the following examples.

### (Specific examples)

As shown in FIG. 13, in one cylindrical member 10a, its open end portion is cut into a substantially V or U shape in a front view. In addition, in another cylindrical member 10b, a part of its outer circumferential surface (a center portion of a side surface) is removed to create a cut surface having a substantially V or U shape in a front view or a circular or elliptic shape corresponding to the cut end surface of the cylindrical member 10a.

First, the cut surfaces of the cylindrical members 10a and 10b are butted against each other. The cylindrical members 10a and 10b are fixed or temporarily fixed and joined to each other by applying an adhesive, a paste, a pressure-sensitive adhesive, or the like to the cut surfaces.

Next, as shown in FIG. 14, the reinforcement fiber base members 2 each obtained by cutting to have a predetermined length are arranged on the cylindrical outer surface of the joined portion 101 and its peripheral portion. At that time, as shown in FIG. 17, the reinforcement fiber base members 2 are arranged as being shifted in the circumferential direction of the joined portion, and are attached in an overlap manner so as to have a predetermined thickness.

Here, in order that the thickness of ends of the reinforcement fiber base members 2 in the width direction gradually changes, the reinforcement fiber base members 2 may be arranged around the joined portion 101 as being shifted from each other also in the width direction as shown in FIG. 18, or the reinforcement fiber base members 2 having different widths may be attached around the joined portion 101 in an overlap manner as shown in FIG. 19. Arranging the reinforcement fiber base members 2 in these manners is preferred, since concentration of stress on the ends in the width direction can be avoided.

Further, an intersection portion C of the reinforcement fiber base members 2 from the left and the right in FIG. 14 is thicker than the other portion. The local thick portion reduces an impregnation rate of a resin when the resin is impregnated, and thus a non-impregnated portion is likely to be included. In order to avoid this, the thickness is uniformed by using members in which fibers are thinned out, as the reinforcement fiber base members 2 at the intersection portion C. Thus, occurrence of a non-impregnated portion can be avoided.

Moreover, after lamination is performed only on the joined portion 101 on the left side in FIG. 14 and forming is performed, lamination may be performed on the remaining right side and forming may be performed similarly.

Specifically, for example, the diameter of each cylindrical member 10 is 500 mm, the number of the reinforcement fiber base members 2 required is 10, and the length of one reinforcement fiber base member 2 is that of 1/4 of the length of the circumference of the joined portion 101. In this case, the length of the circumference of the cut surface of the cylindrical member 10a ≈ 1885 mm [calculated as approximate 3.141 × (500 + 700) / 2], the length of one reinforcement fiber base member 2 = 1885/ 4 ≈ 472 mm, and the overlap length (w) = 472 / 10 = 47.2 mm. In other words, reinforcement fiber base members 2 each having a length of 472 mm are attached in an overlap manner as being each shifted by 47.2 mm, and thus 10 × 4 = 40 of the reinforcement fiber base members 2 are attached on the entire circumference of the joined portion 101.

In the example shown in FIG. 14, where the width of a first reinforcement fiber base member 2 is indicated by W and the length thereof is indicated by L, its end surface is adhered and laminated at its portion slightly deviated from W. By so doing, a reinforcement fiber base member 2 attached last can be adhered. Then, as the positions of the reinforcement fiber base members 2 are shifted from each other like a necklace, their end surfaces are adhered to the joined portion 101, and, finally, the reinforcement fiber base members 2 are attached in an overlap manner so as to extend around the joined portion 101 and beyond the first laminated reinforcement fiber base member 2 as shown. By so doing, the thickness at the joined portion 101 is, at any point, a thickness required in terms of strength.

Giving a more detailed description, FIG. 17 is a schematic diagram of a joined portion 101 of the cylindrical members 10 as viewed from the top and shows a situation where the reinforcement fiber base members 2 are arranged so as to be attached in an overlap manner on the right side of the joined portion 101. As described above, for the first reinforcement fiber base member 2 (width W, length L), its end surface is adhered at a position exceeding the width W of the reinforcement fiber base member. Then, one end surfaces are adhered along the joined portion 101 at regular intervals to form a substantially windmill shape, and the required number of the reinforcement fiber base members 2 are laminated to form a fiber layer. Subsequently, the reinforcement fiber base members 2 are attached in an overlap manner counterclockwise on the left side to form a substantially windmill shape, and laminated to have a thickness required in terms of strength.

Further, as shown in FIG. 18, an example where the reinforcement fiber base members 2 are arranged as being shifted in the width direction and the circumferential direction of the joined portion 101 will be described. For example, five reinforcement fiber base members 2 each having a width of 300 mm and a length of 500 mm are sequentially attached in an overlap manner as being each shifted rightward by 10 mm. Next, reinforcement fiber base members 2 are attached in an overlap manner as being each shifted leftward by 10 mm. Further, reinforcement fiber base members 2 are arranged as being each shifted rightward by 10 mm, and reinforcement fiber base members 2 are further arranged until a predetermined thickness is ensured, to form a fiber layer. By so doing, the total width of the fiber layer formed by the reinforcement fiber base members 2 is 400 mm, and thin portions each having a width of 50 mm occur in end portions in the width direction, whereby the end portions have gradual slopes.

After the arranging process described above, an elbow-type composite cylindrical body 100 shown in FIG. 20 can be obtained through the process of covering the fiber layer with the bag member and sealing the bag member to the outer circumferential surfaces, the process of depressurizing the inside of the sealed bag member and injecting the fluid resin into the bag member, and the process of impregnating the injected fluid resin into the fiber layer and curing or solidifying the fluid resin.

It should be noted that in order to manufacture a composite cylindrical body 100 having the same shape, as shown in FIG. 15, a first cylindrical member 10c of which an open end portion is obliquely cut and second and third cylindrical members 10d and 10e of each of which an open end portion is cut into a substantially V or U shape in a front view may be butted against each other and joined to each other. In this case, all the cylindrical members may be joined at one time, or cylindrical members of which open end portions are obliquely cut may be joined to each other, the resulting bent portion may be cut such that the cylindrical members 10d and 10e are formed, and the cylindrical member 10c may finally be butted and joined thereto.

Further, as shown in FIG. 16, first and second cylindrical members 10f and 10g of which open end portions are partially and obliquely cut and a third cylindrical member 10h of which an open end portion is cut into a substantially V or U shape in a front view are butted against each other, to obtain a tee type cylindrical body 100.

Thus, even a composite cylindrical body 100 having a complicated shape with a bent portion can easily be formed by butting the cut surfaces of the cylindrical members 10 against each other and joining the cylindrical members 10 to each other. In addition, by the process of arranging the reinforcement fiber base members 2, occurrence of wrinkles in the bag member (bag film 6) can be prevented, the forming operation can be efficiently progressed in a short time, and the appearance and strength of the joined portion 101 can also be excellent.

### -Method of forming fiber-reinforced resin formed product-

Next, a method of forming a fiber-reinforced resin formed product according to embodiments of the present invention will be described. In the forming method, a fiber-reinforced resin formed product having a cylindrical portion is formed. The fiber-reinforced resin formed product having the cylindrical portion and obtained by this forming method can be in various forms. Hereinafter, some forms among others will be described. It should be noted that similarly to the above, this forming method is characterized in the process of arranging the reinforcement fiber base members, and each process subsequent to the arranging process may be the same as that described above. In other words, this forming method includes a process of covering a fiber layer with a bag member and sealing the bag member to a circumferential surface, a process of depressurizing the inside of the sealed bag member and injecting a fluid resin into the bag member, and a process of impregnating the injected fluid resin into the fiber layer and curing or solidifying the fluid resin, and these processes are the same as those described above. Thus, in the following, the detailed description of these processes is omitted, and a main characteristic configuration will be described in detail.

### <Embodiment 4>

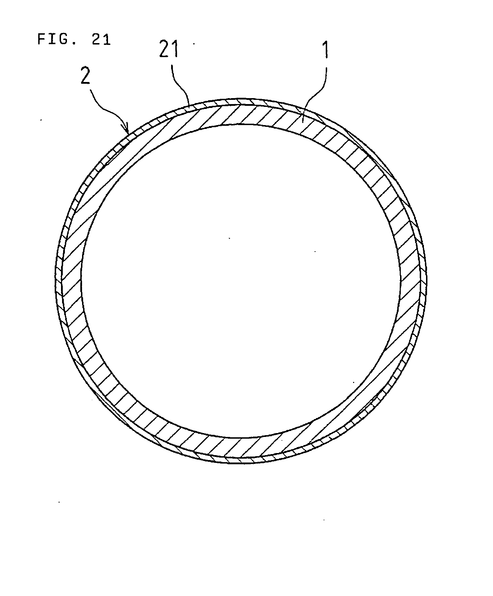

A method of forming a fiber-reinforced resin formed product according to Embodiment 4 of the present invention will be described with reference to the drawings. FIGS. 21 to 26 show the method of forming a fiber-reinforced resin formed product according to Embodiment 4.

In the method of forming a fiber-reinforced resin formed product according to the present embodiment, a forming die 1 having a cylindrical portion is used. The forming die 1 is preferably a rotary cylindrical body that is provided so as to be rotatable about an axial direction of the cylindrical body as a rotation axis. For a reinforcement fiber base member 2, an inner layer base member 21 to be arranged along the outer circumferential surface of the forming die 1 in its circumferential direction and outer layer base members 22 to be laminated in an overlap manner on the external side of the inner layer base member 21, are used.

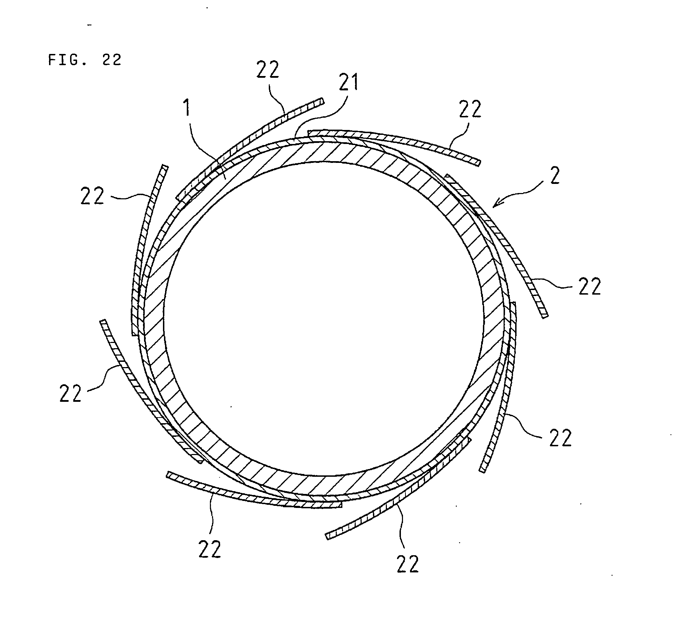

First, as shown in FIG. 21, the inner layer base member 21 that is a binder is arranged on the outer circumferential surface of the forming die 1. Next, as shown in FIG. 22, the outer layer base members 22 are arranged in the circumferential direction as being shifted, so as to partially overlap each other. An outer layer base member 22 is adhered and fixed at one end side thereof in the circumferential direction. In addition, the other end side of the outer layer base member 22 in the circumferential direction is not adhered and is arranged along the outer shape of the forming die 1. Similarly, an outer layer base member 22 to be subsequently attached is arranged such that one end side thereof in the circumferential direction is adhered and the other end side thereof is not adhered but overlaid on one end side of another outer layer base member 22 adjacent thereto.

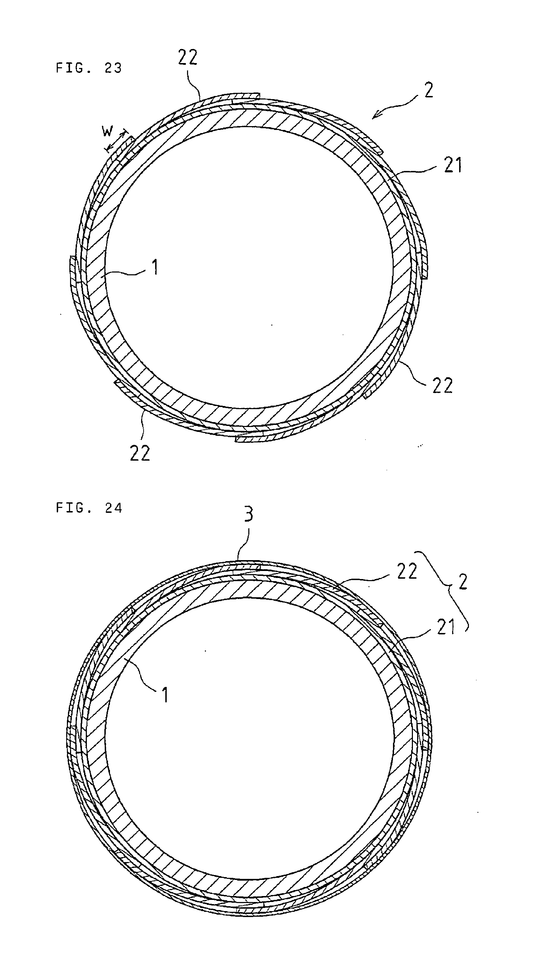

As shown in FIG. 23, an overlap length w by which one outer layer base member 22 overlaps another outer layer base member 22 adjacent thereto when laminated is preferably ensured to be a length equal to or larger than that of 1/10 of the length of one outer layer base member 22 in the circumferential direction. In addition, the number of the laminated outer layer base members 22 is selected as appropriate on the basis of conditions such as the type and the thickness of the reinforcement fiber base member, and, for example, about 10 outer layer base members 22 may be laminated. Further, the thickness of the reinforcement fiber base member 2 can easily be selected by the number of the outer layer base members 22 to be laminated. By decreasing the amount, by which one outer layer base member 22 is shifted from another outer layer base member 22 adjacent thereto when arranged, to ensure a large overlap area, the reinforcement fiber base member 2 may have a lamination structure that is thick due to a large number of the outer layer base members 22.

It should be noted that in a state where the outer layer base members 22 are laminated as described above, a laminated form where the position of an end of an outer layer base member 22 in the circumferential direction coincides with the position of an end of an outer layer base member 22 of any other layer in the circumferential direction is not preferred. Therefore, in this forming method, one end of any outer layer base member 22 in the circumferential direction and another end of any other outer layer base member 22 are located so as to be shifted from each other in the circumferential direction. Then, a regular overlap length w of the outer layer base members 22 is ensured throughout the circumference of the forming die 1, and a fiber layer is formed.

After the outer layer base members 22 are arranged and laminated to have a predetermined thickness as described above, a stretchable nonwoven fabric 3 is wound as shown in FIG. 24. Since each outer layer base member 22 is adhered at the one end side thereof in the circumferential direction and is merely overlaid at the other end side thereof, even if the laminated outer layer base members 22 are pressed and compressed when the nonwoven fabric 3 is wound, wrinkles can be moved to the other end side and removed. Thus, the laminated outer layer base members 22 can be fixed along the outer circumference of the forming die 1 without causing any wrinkles.

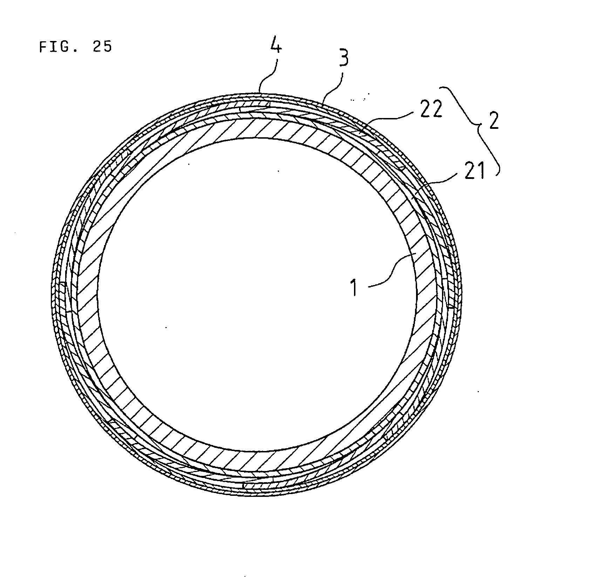

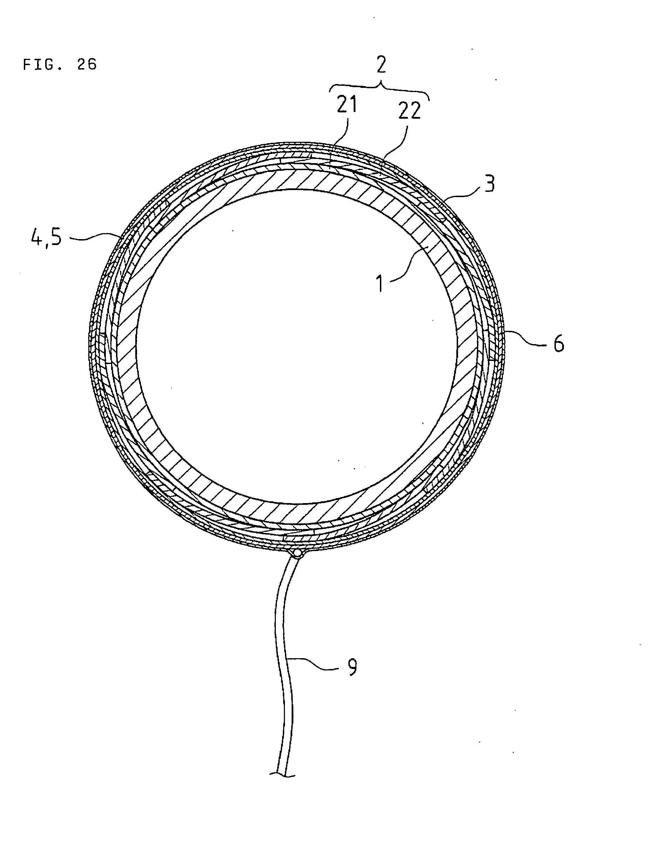

Next, as shown in FIG. 25, a release fabric 4 is wound on the outer circumferential surface of the forming die 1 on which the nonwoven fabric 3 is wound. As shown in FIG. 26, a resin spreading member 5 is arranged in an overlap manner on the external side of the release fabric 4. On the external side of the resin spreading member 5, an injection pipe 9 for an injection resin is located. The form of locating the injection pipe 9 is optional, but the injection pipe 9 is preferably provided near a bottom of the forming die 1. Further, a depressurizing line that is not shown is arranged, and the surrounding of the fiber layer is covered with a bag film 6. Next, the inside of the bag film 6 is depressurized by a depressurizing source, and the fluid resin is injected thereinto. At that time, it is confirmed that there is no wrinkle in the laminated reinforcement fiber base member (the outer layer base members 22) and the like. The thickness is measured by direct touching to confirm whether or not a predetermined thickness is ensured. If any defect is found as a result of these confirmations, the working operation can be interrupted to correct the defect. The injection resin is spread uniformly and entirely in the fiber layer through the resin spreading member 5 and impregnated thereinto.

When the resin injection is completed, the injection resin is cured with the depressurized state in the bag film 6 maintained, and is integrated with the reinforcement fiber base member 2. Next, the solidified formed body is removed from the forming die 1, and the edge of the cylindrical formed body is trimmed to obtain a fiber-reinforced resin formed product.

By the method of forming a fiber-reinforced resin formed product as configured above, the reinforcement fiber base member 2 can be arranged in the bag film 6 without causing any wrinkles, the forming operation can be efficiently progressed in a short time, and a formed product having an excellent appearance and an excellent strength can be obtained.

### <Embodiment 5>

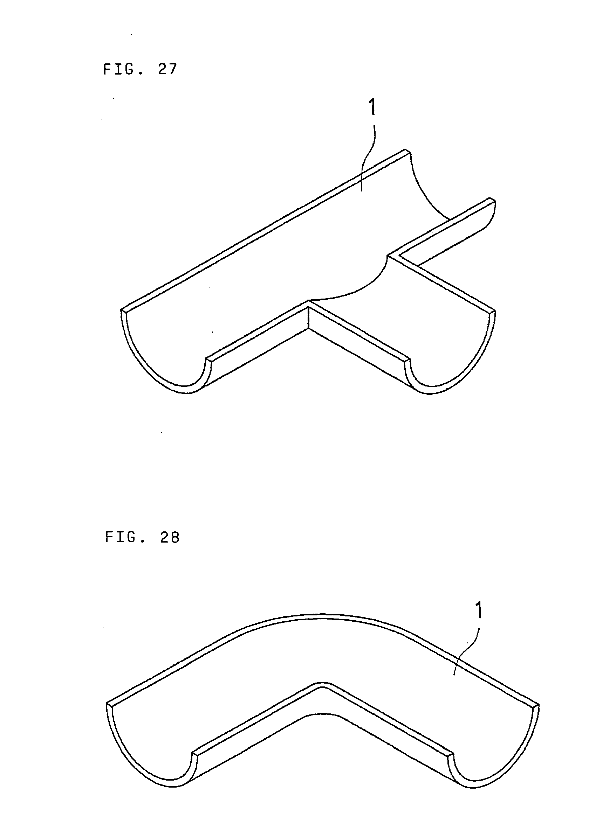

Next, a method of forming a fiber-reinforced resin formed product according to Embodiment 5 of the present invention will be described with reference to the drawings. FIGS. 27 to 33 show the method of forming a fiber-reinforced resin formed product according to Embodiment 5.

In the exemplified form, as shown in FIGS. 27 and 28, forming dies 1 each having a forming surface corresponding to a half-cylindrical shape are used. With the half forming die 1 shown in FIG. 27, a tee type fiber-reinforced resin formed product can be obtained. With the half forming die 1 shown in FIG. 28, an elbow type fiber-reinforced resin formed product can be obtained. With respect to the forming die 1, a reinforcement fiber base member 2 may be arranged on the inner circumferential surface of the forming die 1 and forming may be performed, or the reinforcement fiber base member 2 may be arranged on the outer circumferential surface of the forming die 1 and forming may be performed,

The reinforcement fiber base member 2 to be arranged includes an inner layer base member 21 and outer layer base members 22. First, the inner layer base member 21 is arranged along the circumferential surface of the half forming die 1. In the process of arranging the outer layer base members 22, the reinforcement fiber base member 2 is arranged along the inner circumferential surface as being shifted in the circumferential direction.

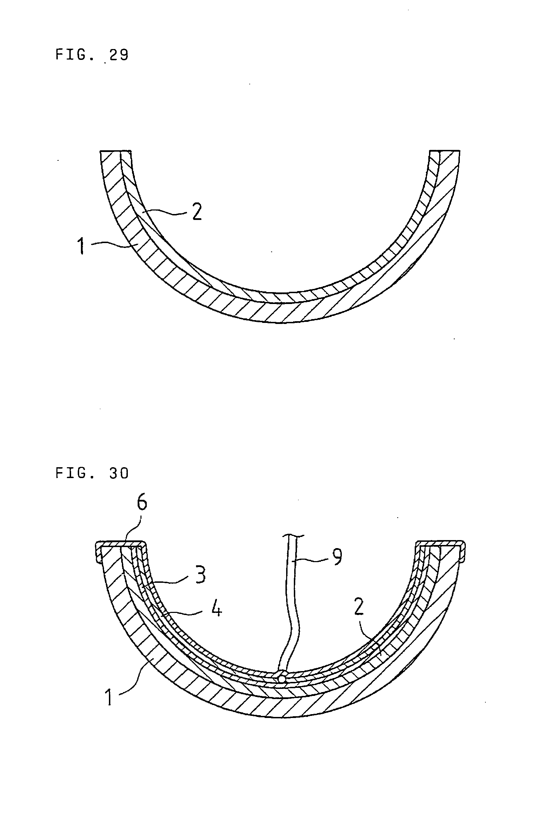

As shown in FIG. 29, when forming is performed on the inner circumferential surface of the half forming die 1, a fiber layer is formed from the reinforcement fiber base member 2, and further, as shown in FIG. 30, a nonwoven fabric 3, a release fabric 4, a resin spreading member, and the like are arranged and covered with a bag film 6 as appropriate. In the bag film 6, a depressurizing line, an injection pipe 9, and the like are also arranged. Thus, a half-cylindrical fiber-reinforced resin formed product is obtained, and a pair of formed bodies are joined to each other to form a tee type or elbow type formed product.

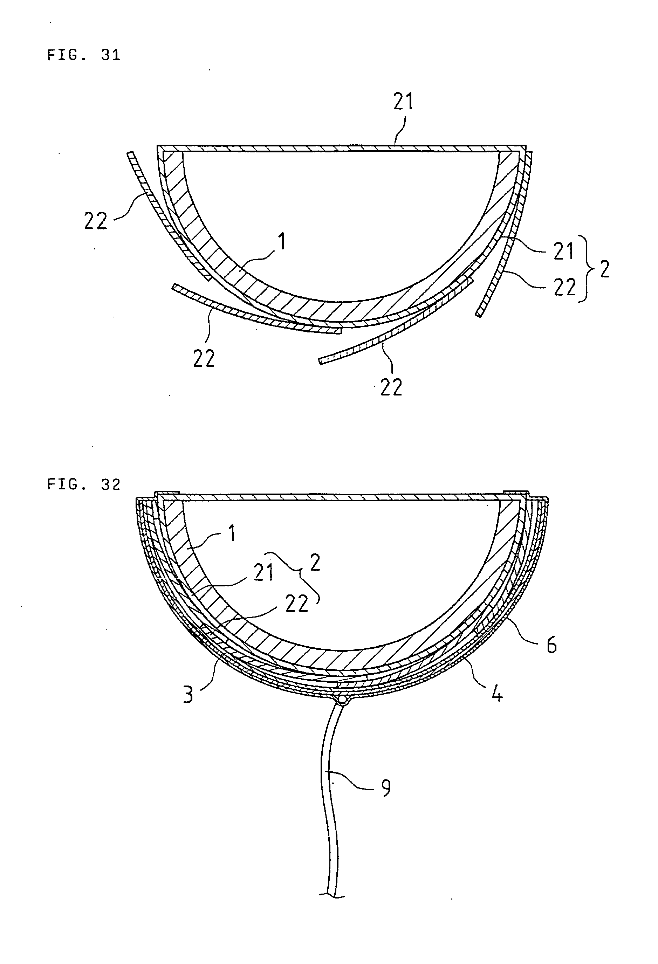

Further, as shown in FIG. 31, when forming is performed on the outer circumferential surface of the half forming die 1, a plurality of the outer layer base members 22 are wound so as to be arranged in the circumferential direction on the outer surface of the previously-wound inner layer base member 21. Specifically, one outer layer base member 22 is set along the outer circumferential surface of the half forming die 1 in the circumferential direction, and adhered and fixed at one end side thereof in the circumferential direction to the outer surface of the inner layer base member 21. In addition, the other end side of the outer layer base member 22 in the circumferential direction is not adhered and is overlaid along the outer shape of the half forming die 1. Similarly, an outer layer base member 22 to be subsequently arranged is arranged such that one end side thereof in the circumferential direction is adhered to the inner layer base member 21 and the other end side thereof is not adhered and is overlaid on the outer surface of another outer layer base member 22 adjacent thereto. For arranging and fixing the reinforcement fiber base member 2, a spray paste or the like can be used for the inner layer base member 21 and the outer layer base members 22.

In these examples, each outer layer base member 22 is formed as a sheet-like piece obtained by cutting to have a length defined according to the outer diameter of the half forming die 1. In the exemplified form, the outer layer base members 22 are each formed to have a rectangular shape and a size corresponding to the length obtained by dividing the length of the outer circumference of the half forming die 1 by about two to six, and attached in an overlap manner in the circumferential direction. Each of the outer layer base members 22 attached in an overlap manner is adhered and fixed at one end side thereof in the circumferential direction to the inner layer base member 21, and is not adhered at the other end side thereof in the circumferential direction to the inner layer base member 21.

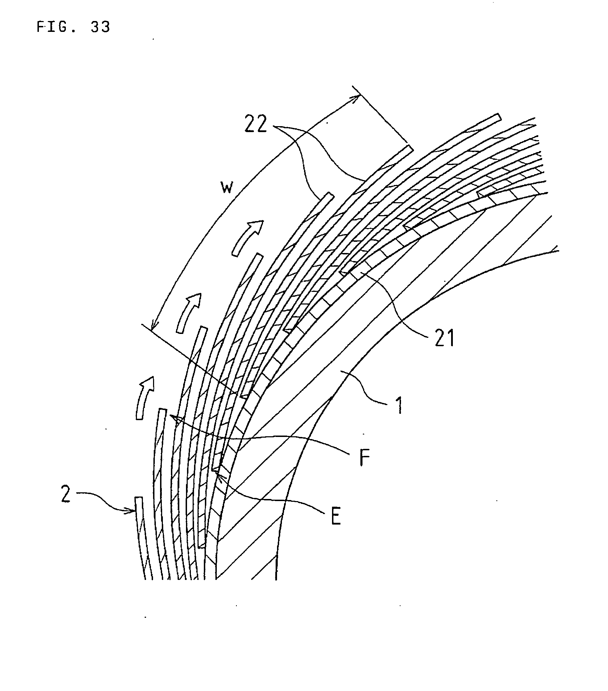

Next, as shown in FIG. 32, the stretchable nonwoven fabric 3 is wound on the outer surfaces of the outer layer base members 22 and fixed without causing unwanted wrinkles in the outer layer base members 22. It should be noted that as shown in FIG. 33, the outer layer base members 22 may be multilayered. In the fiber layer of the outer layer base members 22, a laminated form where the position of an end of an outer layer base member 22 in the circumferential direction coincides with the position of an end of an outer layer base member 22 of any other layer in the circumferential direction is not preferred. Thus, one end E of any outer layer base member 22 in the circumferential direction and another end F of any other outer layer base member 22 are preferably located so as to be shifted from each other in the circumferential direction. Then, a regular overlap length w of the outer layer base members 22 is ensured throughout the outer circumferential surface of the half forming die 1.

The release fabric 4 and the like are arranged on the outer surface of the nonwoven fabric 3 and covered with the bag film 6. Then, a sealing member such a pressure-sensitive adhesive material or a sealing tape is applied to the peripheral portion of the half forming die 1, and the bag film 6 is adhered to the surface of the half forming die 1.

Thus, a hermetically-closed formed portion is formed between the half forming die 1 and the bag film 6. In addition, a depressurizing source for sucking the air in the formed portion to depressurize the inside of the formed portion is connected to the formed portion covered with the bag film 6.

Next, the inside of the bag film 6 is depressurized by the depressurizing source, and a fluid resin is impregnated in a substantially vacuum state. At that time, it is confirmed that there is no wrinkle in the laminated reinforcement fiber base member 2 (particularly, in the outer layer base members 22). Each of the outer layer base members 22 attached in an overlap manner is fixed at one end side thereof in the circumferential direction and is not fixed at the other end side thereof in the circumferential direction. Thus, even when the outer layer base members 22 are sealed with the bag film 6 and depressurized so as to cause wrinkles in the outer layer base members 22 , the wrinkles can be moved to the non-adhered other end sides of the outer layer base members 22 and removed. As a result, occurrence of wrinkles can be effectively prevented. In addition, at that time, the thickness can be measured by direct touching to confirm whether or not the reinforcement fiber base member 2 has a predetermined thickness. If any defect is found as a result of the confirmation, the working operation can be interrupted to correct the defect prior to resin injection.

When the resin injection is completed, the injection resin is cured with the depressurized state in the formed portion maintained, and thus is impregnated and integrated with the reinforcement fiber base member, to obtain a formed product having a half shape. Further, a pair of the formed products are combined and joined to form a tee type or an elbow type formed product.

### <Embodiment 6>

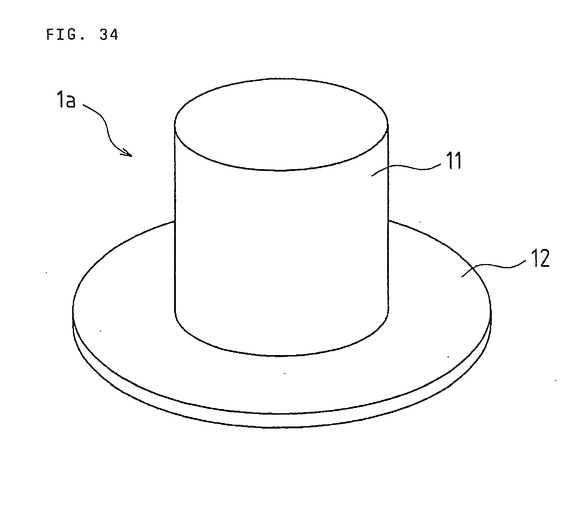

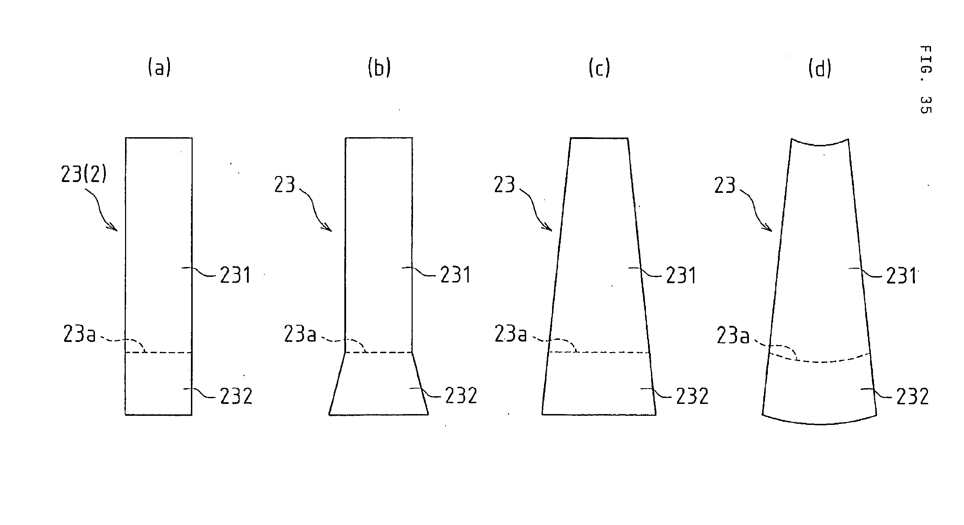

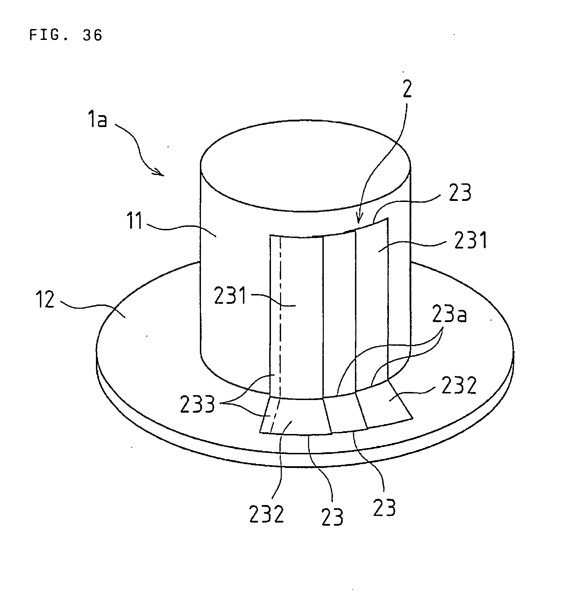

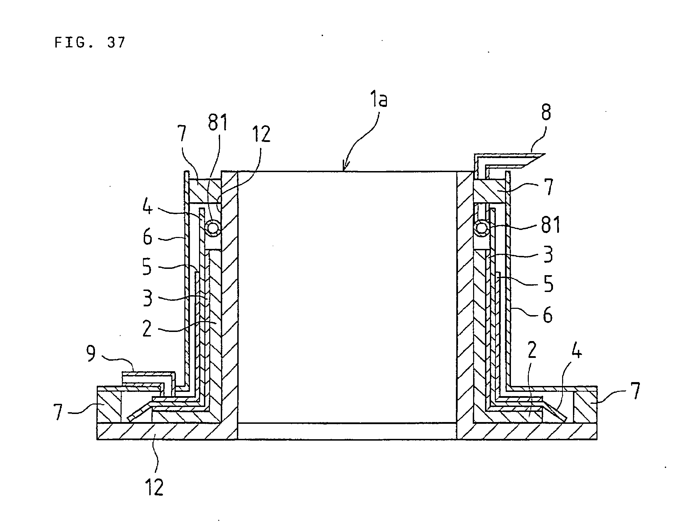

Next, a method of forming a fiber-reinforced resin formed product according to Embodiment 6 of the present invention will be described with reference to the drawings. FIGS. 34 to 37 show the method of forming a fiber-reinforced resin formed product according to Embodiment 6. FIG. 34 is a perspective view showing an example of a forming die, FIGS. 35(a) to 35(d) are plan views showing examples, respectively, of a reinforcement fiber base member. FIG. 36 is a perspective view schematically showing one process of this forming method and a situation where base members are attached to the forming die in an overlap manner. FIG. 37 is a cross-sectional view schematically showing a state prior to resin injection in this forming method.

In the method of forming a fiber-reinforced resin formed product according to the present embodiment, a flanged pipe is formed by using a forming die 1a having a cylindrical portion 11 and a flange portion 12 as shown in FIG. 34, instead of the forming die 1 formed of the cylindrical body as in Embodiment 5. In other words, the forming die 1a has, as a forming surface corresponding to a flanged pipe, the cylindrical portion 11 and the flange portion 12 at the outer circumference of an end of the cylindrical portion 11.

For a reinforcement fiber base member 2, strip sheet-shaped base members 23 each integrally having a portion to be arranged on the cylindrical portion 11 of the forming die 1a and a portion to be arranged on the flange portion 12 are used. In other words, each base member 23 has a one-sheet shape that extends over the cylindrical portion 11 and the flange portion 12 of the forming die 1a, and can be in various forms as exemplified in FIGS. 35(a) to 35(d).

Specifically, each strip-like base member 23 has a shape corresponding to the outer shape of the forming die 1a. For example, in the base member 23 shown in FIG. 35(a), an upper portion 231 of the base member 23 is larger than a lower portion 232 of the base member 23, formed in a rectangular shape, and arranged along the outer circumferential surface of the cylindrical portion 11 of the forming die 1a. In addition, the lower portion 232 is smaller than the upper portion 231 and arranged along the outer circumferential surface (upper surface) of the flange portion 12 of the forming die 1a. One base member 23 is formed such that its size corresponds to the sizes of the cylindrical portion 11 and the flange portion 12 of the forming die 1a, and the forming die 1a is selected as appropriate according to the dimension of a completed formed product. In this case, when the width of one strip-like base member 23 is too small with respect to the forming die 1a, the number of the base members 23 to be laminated increases and thus the amount of work also increases, and thus this situation is not preferred. When the width is too large, the effect of removing wrinkles when laminated is lessened, and thus this situation is not preferred. Therefore, the width of each base member 23 is preferably a width corresponding to a length of 1/16 to 1/2 of the length of the outer circumference of the cylindrical portion 11.

In addition, the base member may be formed in a trapezoid shape in which the lower portion 232 spreads toward the bottom, as shown in FIG. 35(b). Further, the base member may be formed such that the base member 23 entirely spreads toward the bottom as shown in FIGS. 35(c) and 35(d), to have a trapezoid shape in the entire base member 23 as shown in FIG. 35(c) or to have an inverted sector shape as shown in FIG. 35(d).

When forming a flanged pipe, in a process of arranging the reinforcement fiber base member 2, a plurality of the base members 23 each having a shape as described above are attached along the outer circumferential surface of the forming die 1a in its circumferential direction in an overlap manner in order. Each base member 23 is arranged such that the upper portion 231 is arranged along the outer circumferential surface of the cylindrical portion 11, the lower portion 232 is arranged along the upper surface of the flange portion 12, and the base member 23 is folded at the boundary 23a between the upper portion 231 and the lower portion 232 of the base member 23 along the internal corner between the cylindrical portion 11 and the flange portion 12.

It should be noted that similarly to the embodiments described above, an inner layer base member 21 may previously be arranged as a binder on the cylindrical portion 11 of the forming die 1a.

Next, the base members 23 to be adjacently arranged are wound by being located such that the positions thereof are shifted from each other in the circumferential direction of the forming die 1a and being attached in an overlap manner. Specifically, as shown in FIG. 36, one end side (a long side portion) 233 of a base member 23 in the circumferential direction is adhered and fixed to the outer circumferential surface of the forming die 1a (or the inner layer base member 21). The other end side of the base member 23 in the circumferential direction is not adhered and is arranged along the outer shape of the forming die 1a. Similarly, a base member 23 to be subsequently arranged is arranged such that one end side thereof in the circumferential direction is adhered and the other end side thereof is not adhered and is overlaid on one end side of another base member 23 adjacent thereto.

Then, a plurality of the base members 23 are attached to the cylindrical portion 11 and the flange portion 12 of the forming die 1a in an overlap manner to have a predetermined thickness, and laminated so as to closely contact therewith without causing any wrinkles. In other words, an adhesive is applied only to one end side (a long side portion) 233 at one end of each base member 23, and the base members 23 are each shifted in the circumferential direction by a required length and attached to the forming die 1a in order in an overlap manner to be laminated in a multilayer manner.

As shown in FIG. 36, an overlap length by which one base member 23 overlaps another base member 23 adjacent thereto when laminated is preferably ensured to be a length equal to or larger than that of 1/10 of the length of one base member 23 in the circumferential direction. In addition, the number of the base members 23 to be laminated is selected as appropriate on the basis of conditions such as the type and the thickness of the reinforcement fiber base member 2.

In the exemplified form, the thickness of the reinforcement fiber base member 2 can easily be selected by the number of the base members 23 to be laminated. Further, by decreasing the amount, by which one base member 23 is shifted from another base member 23 adjacent thereto when arranged, to ensure a large overlap area, the reinforcement fiber base member 2 may have a lamination structure that is thick due to a large number of the base members 23.

In this case, in a state where the base members 23 are laminated, a laminated form where the position of an end of a base member 23 in the circumferential direction coincides with the position of an end of an base member 23 of any other layer in the circumferential direction is not preferred, and it is preferred that one end of a base member 23 of any layer in the circumferential direction and another end of a base member 23 of another layer are located so as to be shifted from each other in the circumferential direction.

After the lamination of the base members 23 on the forming die 1a is completed, a stretchable nonwoven fabric 3 is wound to press and hold the base members 23 against the forming die 1a and fix the base members 23 (see FIG. 37). A plurality of the laminated base members 23 are adhered at one end sides thereof in the circumferential direction and overlaid at the other end sides thereof. Thus, even if the base members 23 are pressed and compressed when the nonwoven fabric 3 is wound, the applied force can be released at the other end sides, and each base member 23 can be fixed along the outer circumferential surface of the forming die 1a without causing any wrinkles in the base member 23.

Further, a release fabric 4 is arranged so as to be wound on the outer circumferential surface of the forming die 1a on which the nonwoven fabric 3 is wound. As shown in FIG. 37, the release fabric 4 is preferably arranged to the laminated reinforcement fiber base member 2 and the nonwoven fabric 3 so as to cover the entireties thereof.

Next, a resin spreading member 5 is arranged on the external side of the release fabric 4. The range in which the resin spreading member 5 is arranged is, as shown in FIG. 37, from a position slightly lower than the upper end of the laminated reinforcement fiber base member 2 to the end of the reinforcement fiber base member 2 on the flange portion 12. It should be noted that the resin spreading member 5 may be omitted if formability is not influenced depending on conditions such as the lamination thickness and the type of the material, of the reinforcement fiber base member 2.

At the upper portion of the forming die 1a, a depressurizing line 81 is arranged inside the release fabric 4. The depressurizing line 81 is connected to a depressurizing source such as a vacuum pump via a hose 8. In addition, an injection pipe 9 for an injection resin is arranged to the reinforcement fiber base member 2 laminated on the flange portion 12 of the forming die 1a. The form of locating the injection pipe 9 is optional, but the injection pipe 9 is preferably provided near the flange portion 12 of the forming die 1a.

Next, the forming die 1 on which the release fabric 4, the resin spreading member 5, the injection pipe 9, and the like are arranged is hermetically covered with a bag film 6. In addition, a sealing member 7 such as a pressure-sensitive adhesive material or a sealing tape is arranged at the outer circumference of the upper portion of the cylindrical portion 11 and the peripheral portion of the flange portion 12 in the forming die 1a, and the bag film 6 is fixed and sealed to the surface of the forming die 1a. Thus, a hermetically-closed formed portion is formed between the forming die 1a and the bag film 6.

Prior to resin injection, the inside of the bag film 6 is depressurized by the depressurizing source. At that time, it is confirmed that there is no wrinkle in the laminated base members 23 and the like. The thickness can be measured by direct touching from above the bag film 6 to confirm whether or not a predetermined thickness is ensured. If any defect is found as a result of these confirmations, the working operation can be interrupted to correct the defect.

Next, the resin is injected from the injection pipe 9 in the depressurized environment and spread out in the formed portion. The injection resin is spread uniformly and entirely through the resin spreading member 5 and impregnated into the nonwoven fabric 3 and the reinforcement fiber base member 2. When a thermosetting material is used as the injection resin, the resin is cured by heating or by previously adding a curing agent to the resin, to obtain a formed product having a predetermined shape. When a thermoplastic resin is used, the resin is heated until liquefied. The liquefied resin is injected, and then, solidified by cooling the entirety of the forming die 1a with the depressurized state maintained, and impregnated and integrated with the reinforcement fiber material. The solidified formed body is removed from the forming die 1a, and then the edge of the formed body that is formed in a cylindrical shape and a flanged shape is trimmed, to obtain a formed product that is a flanged pipe.

As described above, by the method of forming a fiber-reinforced resin formed product according to the present invention, the reinforcement fiber base member 2 (23) can be arranged in the bag film 6 without causing any wrinkles, the forming operation can be efficiently progressed in a short time, and a formed product having an excellent appearance and an excellent strength can be obtained.

### <Embodiment 7>

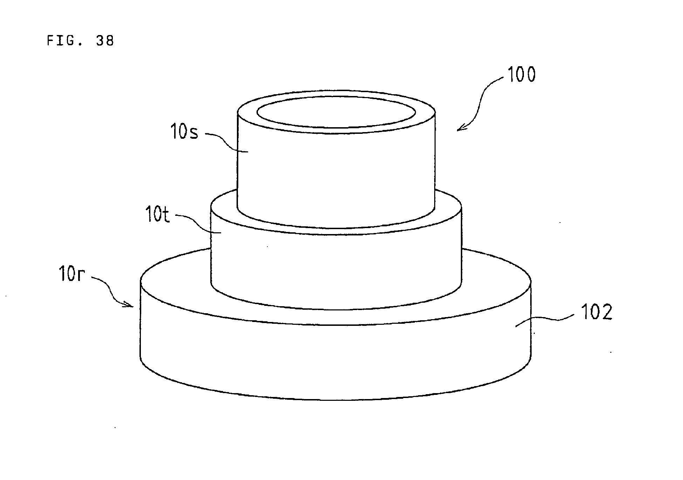

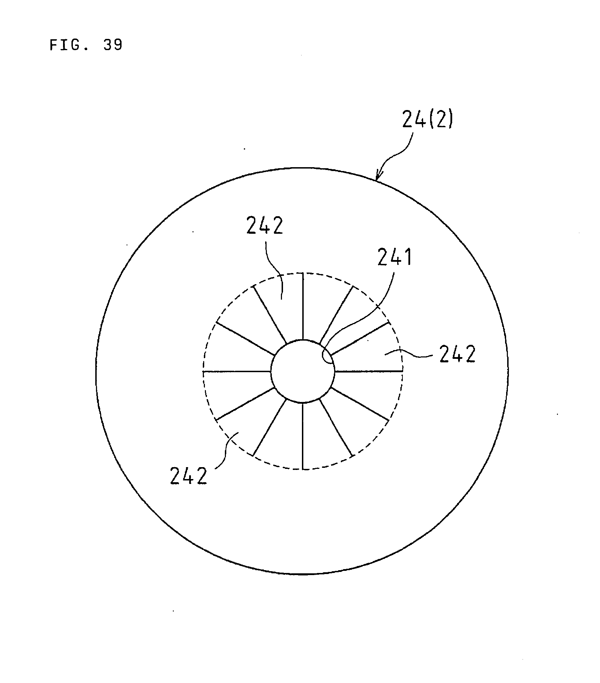

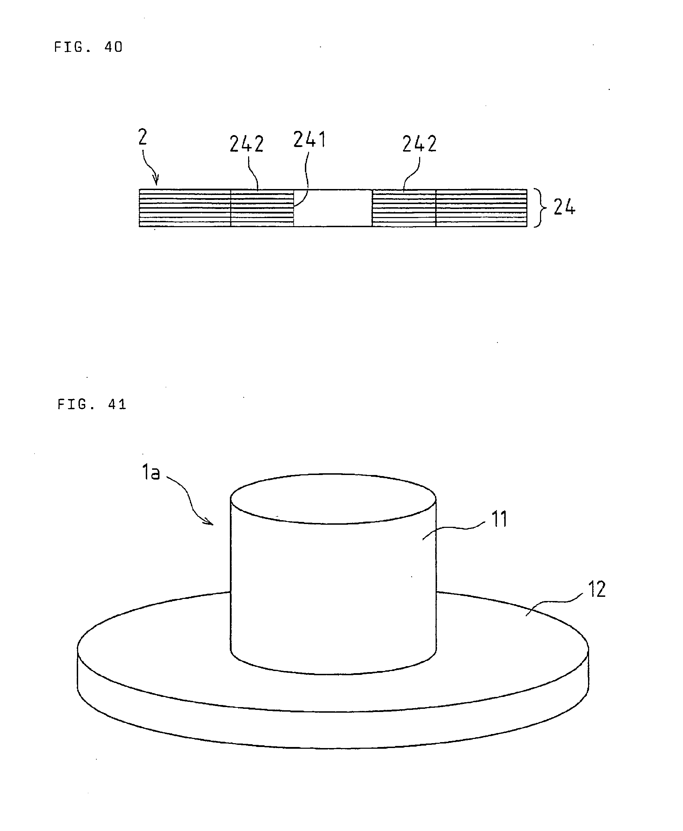

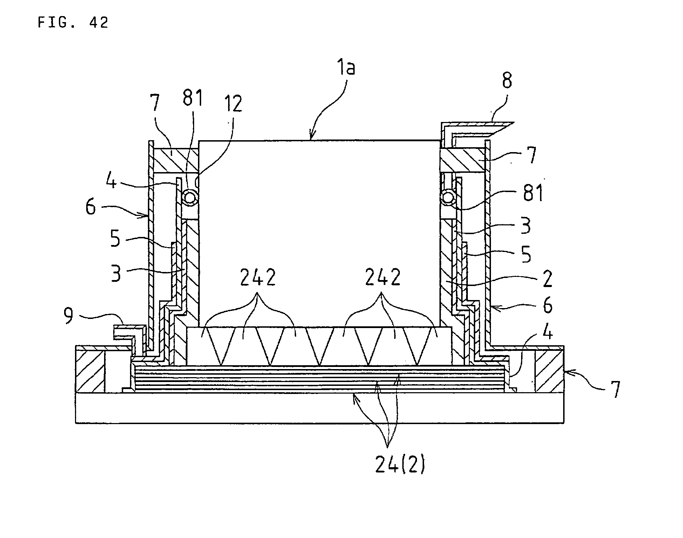

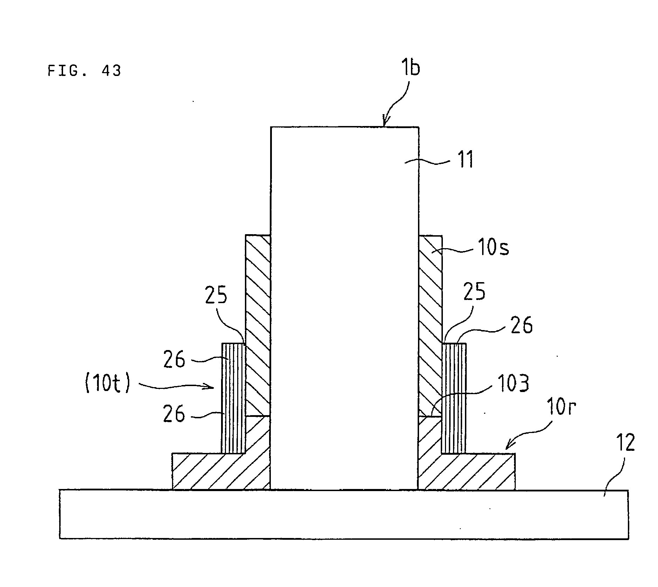

Next, a method of forming a fiber-reinforced resin formed product and a method of joining cylindrical members, according to Embodiment 7 of the present invention, will be described with reference to the drawings. FIGS. 38 to 43 illustrate Embodiment 7, FIG. 38 is a perspective view showing a formed product obtained in Embodiment 7, FIG. 39 is a plan view showing one example of a used reinforcement fiber base member (base member), FIG. 40 is a cross-sectional view showing a state where the base members in FIG. 39 are laminated, FIG. 41 is a perspective view showing one example of a forming die, and FIG. 42 is an illustration diagram schematically showing one forming process in which the forming die shown in FIG. 41 is used. FIG. 43 is an illustration diagram showing the subsequent process of FIG. 42 by a cross-section.

In Embodiment 7, as shown in FIG. 38, a formed product 100 with a shape integrally having a flange 102 and cylindrical bodies (10s and 10t) is formed. For forming the formed product 100, a two-stage forming method is used. In other words, initially, a first formed product 10r in which a cylindrical body and a flange are integrally formed is formed by the method of forming a fiber-reinforced resin formed product according to the present embodiment. Subsequently, the first formed product 10r and a body pipe 10s are joined to each other by the method of joining cylindrical members according to the present embodiment. In this manner, the formed product 100 shown in FIG. 38 is formed.

The first formed product 10r mainly forms the flange 102 of the formed product 100. When forming the first formed product 10r, a forming die 1a having a cylindrical portion 11 and a flange portion 12, which is the same in form as that in Embodiment 4, is used.

As shown in FIG. 39, a reinforcement fiber base member 2 to be arranged on the forming die 1a is previously formed in a substantially disc shape in view of the size of the first formed product 10r and further the size of the flange 102 of the formed product 100. For example, as shown in FIG. 39, a circular sheet-like base member 24 having an outer dimension corresponding to the size of the flange 102 can be used, and in the base member 24, a circular center portion is cut out to form a through hole 241.

Further, a plurality of cuts are radially formed around the through hole 241 of the base member 24 to form a plurality of standing-up pieces 242. Thus, the base member 24 is formed such that when the cylindrical portion 11 of the forming die 1a is inserted into the through hole 241, the standing-up pieces 242 stand up along the outer circumferential surface of the cylindrical portion 11. Therefore, the sizes of the through hole 241 and the standing-up pieces 242 are set so as to correspond to the outer diameter of the cylindrical portion 11 of the forming die 1a.

A plurality of the base members 24 each having such a shape are preferably prepared in a state where they are laminated on each other, before being arranged on the forming die 1a. As shown in FIG. 40, the plurality of base members 24 are laminated such that the positions of the through holes 241 coincide with each other. It should be noted that the standing-up pieces 242 of each base member 24 are preferably laminated such that the position of each standing-up piece 242 does not completely overlap those of other upper and lower base members 24. In other words, when the plurality of base members 24 are laminated on each other, each base member 24 is shifted in the circumferential direction from a base member 24 laminated below by being rotated in the circumferential direction by a regular amount, and is laminated thereon. Thus, a state of being uniformly laminated can be provided when the standing-up pieces 242 stand up, and it is effective for ensuring desired strength of the formed product 10r.

When the base members 24 are laminated as shown in FIG. 40, the base members 24 are fitted onto the cylindrical portion 11 of the forming die 1a shown in FIG. 41, with this integrated state maintained. The standing-up pieces 242 of the laminated base members 24 individually stand up at the cut portions and are arranged along the outer circumferential surface of the cylindrical portion 11 of the forming die 1a (see FIG. 42). The cylindrical portion 11 of the forming die 1a may be formed in a substantially circular cone shape or a circular truncated cone shape in view of the workability of fitting the base members 24.

Next, as shown in FIG. 42, a bag film 6 is arranged on the outer circumferential surface of the forming die 1a to hermetically cover the reinforcement fiber base member 2 (the laminated base members 24). In addition, a sealing member 7 such as a pressure-sensitive adhesive material or a sealing tape is arranged at the outer circumference of the upper portion of the cylindrical portion 11 and the peripheral portion of the flange portion 12 in the forming die 1a, and the bag film 6 is fixed and sealed to the surface of the forming die 1 a. Thus, a hermetically-closed formed portion is formed between the forming die 1a and the bag film 6.

Additionally, a depressurization/suction port and a depressurizing line that are not shown are arranged at the upper portion of the forming die 1a, and a depressurizing source is connected thereto. Further, an injection pipe for an injection resin is arranged to the reinforcement fiber base member 2 laminated on the flange portion 12 of the forming die 1a.

Prior to resin injection, the inside of the bag film 6 is depressurized by the depressurizing source. At that time, it is confirmed that there is no wrinkle in the laminated base members 24. The thickness can also be measured by direct touching from above the bag film 6 to confirm whether or not a predetermined thickness is ensured. If any defect is found as a result of these confirmations, the working operation can be interrupted to correct the defect.

Next, a fluid resin is injected from the injection pipe in the depressurized environment caused by vacuum suction and is spread out in the formed portion. The resin is spread uniformly and entirely through a resin spreading member 5 and impregnated into a nonwoven fabric 3 and the reinforcement fiber base member 2.

A solidified formed body is removed from the forming die 1a, and then the edge of the formed body that is formed in a cylindrical shape and a flanged shape is trimmed, to obtain the formed product 10r.

Subsequently, as shown in FIG. 43, with respect to a forming die 1b having a cylindrical portion 11 and a flange portion 12, the first formed product 10r is fitted through the cylindrical portion 11 and set on the flange portion 12 of the forming die 1b. On the upper end of the first formed product 10r, the body pipe 10s having substantially the same inner diameter and outer shape as those of the first formed product 10r is placed by being fitted through the cylindrical portion 11 of the forming die 1b. Thus, the upper end surface of the first formed product 10r and the lower end surface of the body pipe 10s are butted against each other to be in contact with each other.

After being set on the forming die 1b in a state where the first formed product 10r and the body pipe 10s are in contact with each other as described above, the first formed product 10r and the body pipe 10s are integrated with each other by joining the upper end surface of the first formed product 10r and the lower end surface of the body pipe 10s to each other. In the joining method according to the present embodiment, a reinforcement fiber base member 2 is arranged so as to extend over the butted end surfaces (an arranging process). Thus, a formed product 10t that is a joined portion is formed.

For the reinforcement fiber base member 2, ones that are the same as the outer layer base members 22 described in the embodiments described above can be used. An arranging process is performed in which an inner layer base member 25 is wound along the outer circumference of a joined portion 103 and then a plurality of outer layer base members 26 are wound in the circumferential direction in order and attached in an overlap manner.

Each outer layer base member 26 is formed in a rectangular shape by cutting to have a length defined according to the outer diameter of the joined portion 103 of the first formed product 10r and the body pipe 10s.

Each outer layer base member 26 is adhered and fixed at one end side thereof in the circumferential direction to the inner layer base member 25 and is not adhered at the other end side thereof in the circumferential direction to the inner layer base member 25. The method of winding the outer layer base members 26 is preferably the above-described method in which a plurality of the outer layer base members 26 are arranged in the circumferential direction in an overlap manner on the outer surface of the previously-wound inner layer base member 25.

Similarly, a base member 26 to be subsequently arranged is arranged such that one end side thereof in the circumferential direction is adhered to the inner layer base member 25 and the other end side thereof is not adhered and is overlaid on the outer surface of another outer layer base member 26 adjacent thereto.

The outer layer base members 26 are laminated in order as each of the arranged positions thereof is shifted in the circumferential direction by a regular amount. Desirably, an overlap length by which one outer layer base member 26 overlaps another outer layer base member 26 adjacent thereto when laminated is ensured to be a length equal to or larger than that of 1/10 of the length of one outer layer base member 26.

The outer layer base members 26 are laminated such that a predetermined thickness is ensured, and then a stretchable nonwoven fabric is wound on the outer surfaces of the laminated outer layer base members 26 to fix the outer layer base members 26. On the outer surface of the nonwoven fabric, a release fabric and a resin spreading medium are arranged in order, and an injection pipe for an injection resin is located on its external side. In this case as well, the injection pipe is preferably located near the flange end of the first formed product 10r. Next, the forming die 1b on which the reinforcement fiber base member 2, the nonwoven fabric, the release fabric, the resin spreading medium, and the injection pipe are arranged is hermetically covered with a bag film and a sealing member. To the forming die 1b covered with the bag film, a depressurizing source for suctioning the inside air to depressurize the inside of the bag film is connected, and the inside of the bag film is depressurized.

Here, it is confirmed that no wrinkle occurs in the laminated reinforcement fiber base member 2 (particularly, in the outer layer base members 26). Each of the outer layer base members 26 attached in an overlap manner is fixed at one end side thereof in the circumferential direction and is not fixed at the other end side thereof in the circumferential direction. Thus, even when the outer layer base members 26 are sealed with the bag film and depressurized, occurrence of wrinkles in the outer layer base members 26 is avoided, and wrinkles can be moved to the non-adhered other end sides of the outer layer base members 26 and removed. In addition, at that time, the thickness can be measured by direct touching to confirm whether or not the reinforcement fiber base member 2 has a predetermined thickness. If any defect is found as a result of the confirmations, the working operation can be interrupted to correct the defect prior to resin injection.

Next, a fluid resin is injected from the injection pipe, spread out inside the bag film (in a formed portion), and impregnated and integrated with the reinforcement fiber base member 2. When the resin injection is completed, the injection resin is cured with the depressurized state in the formed portion maintained.

Thus, the joined portion 10t can be formed by butting the upper end surface of the first formed product 10r and the lower end surface of the body pipe 10s against each other, and the first formed product 10r and the body pipe 10s are joined to each other. Therefore, the formed product 100 having a shape shown in FIG. 38 can be efficiently formed in a short time. In addition, the joined portion can have an excellent appearance and an excellent strength.

The present invention may be embodied in other various forms without departing from the spirit or essential characteristics thereof. Therefore, the embodiments described above are illustrative in all aspects and should not be construed as being restrictive. The scope of the present invention is defined by the claims, and not restricted by the description of the specification in any way. In addition, variations and modifications belonging to the equivalent scope of the claims are all within the scope of the present invention.

Further, this application claims priority on Patent Application No. 2009-32658 filed in JAPAN on February 16, 2009 and Patent Application No. 2009-153933 filed in JAPAN on June 29, 2009. The entire contents of these Applications are herein incorporated by reference.

### INDUSTRIAL APPLICABILITY

The present invention can be used for efficiently obtaining a joined cylindrical member, a composite cylindrical body, and a fiber-reinforced resin formed product, with their qualities maintained constant.

### DESCRIPTION OF THE REFERENCE CHARACTERS

1, 1a, 1b forming die
2 reinforcement fiber base member
21, 25 inner layer base member
22, 26 outer layer base member
23, 24 base member
3 nonwoven fabric
4 release fabric
5 resin spreading member
6 bag film (bag member)
7 sealing member
8 depressurizing line
9 injection pipe
10 cylindrical member
101 joined portion
100 formed product

## Claims

1. A fiber-reinforced resin formed product forming method of forming a fiber-reinforced resin formed product having a cylindrical portion, the method comprising:
an arranging process of arranging a plurality of sheet-like reinforcement fiber base members along a circumferential surface of a forming die, to form a fiber layer;
a process of covering the fiber layer with a bag member and sealing the bag member to the circumferential surface;
a process of depressurizing an inside of the sealed bag member and injecting a fluid resin into the bag member; and
a process of impregnating the injected fluid resin into the fiber layer and curing or solidifying the fluid resin, wherein
a length of each reinforcement fiber base member in a circumferential direction is that of 1/16 to 1/2 of a length of a circumference of the forming die, and
in the arranging process, the reinforcement fiber base members are arranged so as to partially overlap each other.

2. The fiber-reinforced resin formed product forming method according to claim 1, wherein the forming die has a forming surface corresponding to a half-cylindrical shape, and a pair of formed bodies that have half-cylindrical shapes and that are formed by using the forming die are joined to each other to obtain a cylindrical body.

3. The fiber-reinforced resin formed product forming method according to claim 1,
wherein
the forming die has forming surfaces corresponding to a cylindrical portion and a flange portion at an outer circumference of an end of the cylindrical portion, and
each reinforcement fiber base member has a shape integrally having a portion to be arranged on the forming surface corresponding to the cylindrical portion of the forming die and a portion to be arranged on the forming surface corresponding to the flange portion.

4. The fiber-reinforced resin formed product forming method according to any one of claims 1 to 3, wherein in the arranging process, the plurality of reinforcement fiber base members are continuously attached in an overlap manner along the circumferential surface by adhering one end portion of each reinforcement fiber base member to the forming die and overlaying another end portion of each reinforcement fiber base member on an outer surface of an adjacent reinforcement fiber base member.

5. The fiber-reinforced resin formed product forming method according to any one of claims 1 to 3, wherein in the arranging process, the reinforcement fiber base members are arranged as being shifted in the circumferential direction.

6. The fiber-reinforced resin formed product forming method according to claim 3, wherein in the arranging process, the reinforcement fiber base members are arranged as being bent along a boundary between the cylindrical portion and the flange portion of the forming die, and are attached in an overlap manner along an outer circumferential surface of the cylindrical portion and a surface of the flange portion.

7. A tee type formed product obtained by using a fiber-reinforced resin formed product forming method according to any one of claims 1, 2, 4 and 5.

8. An elbow type formed product obtained by using a fiber-reinforced resin formed product forming method according to any one of claims 1, 2, 4 and 5.

9. A flanged cylindrical formed product obtained by using a fiber-reinforced resin formed product forming method according to any one of claims 1, 3, and 6.
